# FASCICULE DE BREVET EUROPEEN

(11) **EP 3 571 468 B1**
(45) Date de publication et mention de la délivrance du brevet: **29.07.2020**
(21) Numéro de dépôt: 18796680.9
(22) Date de dépôt: 08.11.2018
(51) Int. Cl.: G01C 11/02, B64G 1/10

(54) **PROCÉDÉ D'OBSERVATION DE LA SURFACE TERRESTRE ET DISPOSITIF POUR SA MISE EN OEUVRE**
VERFAHREN ZUR BEOBACHTUNG DER ERDOBERFLÄCHE UND VORRICHTUNG ZUR DURCHFÜHRUNG DESSELBEN
METHOD FOR OBSERVING THE SURFACE OF THE EARTH AND DEVICE FOR IMPLEMENTING SAME

(30) Priorité: 09.11.2017 FR 1760538
(43) Date de publication de la demande: 27.11.2019
(73) Titulaire: Airbus Defence and Space SAS, 31402 Toulouse Cedex 4 (FR)
(72) Inventeur: GEORGY, Pierre-Luc, 31402 Toulouse Cedex 4 (FR)
(74) Mandataire: Ipside
(86) Numéro de dépôt international: PCT/EP2018/080651
(87) Numéro de publication internationale: WO 2019/092126

(56) Documents cités:
- EP-A2- 1 698 856
- WO-A1-2011/089477
- CN-A- 103 954 269

## Description

La présente invention s'inscrit dans le domaine de l'observation aérienne / satellitaire de la surface terrestre.

Plus particulièrement, la présente invention concerne un procédé d'acquisition d'images de la surface terrestre, mettant en oeuvre un véhicule spatial ou aérien, ainsi qu'un dispositif pour la mise en oeuvre de ce procédé.

L'invention concerne également un procédé de commande à distance et un dispositif de commande, notamment à distance, d'un tel dispositif.

L'observation de la surface terrestre, à des fins notamment de cartographie, est couramment réalisée par des véhicules aériens ou des satellites défilants qui acquièrent des images de zones de cette surface, dans les longueurs d'ondes visible ou infrarouge, au moment où ils les survolent.

Cette observation est cependant souvent entravée par de mauvaises conditions d'observation temporaires, telles que la présence au-dessus de la zone observée de nuages et leurs ombres, de reflets de la lumière solaire, etc. De plus, lorsque l'objectif est de réaliser la cartographie de la zone observée, la présence dans cette zone d'objets mobiles tels que des véhicules, avions, navires, etc., au moment de l'acquisition d'images par le véhicule aérien ou le satellite peut également s'avérer indésirable.

On estime ainsi qu'environ 50 % des images acquises par les satellites d'observation sont rejetées en raison d'une couverture nuageuse trop importante de la zone de la surface terrestre concernée, alors même que les prévisions météorologiques avaient été prises en compte lors de la programmation. La couverture nuageuse constitue la principale source d'incertitude pour l'acceptabilité d'une image acquise par un dispositif d'observation aérien ou satellitaire.

Afin de remédier à cet inconvénient, il a été proposé par l'art antérieur de prendre en compte les conditions, notamment météorologiques, en cours au moment de l'observation de la zone cible de la surface terrestre, de sorte à acquérir sélectivement des images, à chaque passage du satellite au-dessus de cette zone, uniquement pour les parties de cette zone qui sont dénuées de nuages ou autres éléments indésirables.

A titre d'exemple, le document CN 103954269 propose ainsi d'équiper un satellite d'observation défilant de deux caméras, dont une à l'avant du satellite repère la couverture nuageuse des zones qui vont être survolées par le satellite. Le fonctionnement de la deuxième caméra, qui est quant à elle située à l'arrière du satellite, pour l'acquisition proprement dite d'images de la surface terrestre, n'est déclenché que lorsque la vue est dégagée.

Le document WO 2011/089477 propose quant à lui un système embarqué sur un satellite défilant, qui permet de déterminer un ordre de priorité pour l'acquisition d'images de zones cibles dont le satellite se rapproche. Ce système met en oeuvre plusieurs dispositifs d'acquisition d'images, dont l'un permet d'obtenir une vue de la couverture nuageuse au-dessus des zones cibles, avant que le satellite ne les atteigne, et l'autre réalise l'acquisition d'images des seules zones cibles pour lesquelles il est déterminé que la couverture nuageuse est acceptable.

Le document EP 1 698 856 décrit également un procédé d'obtention de données concernant une zone cible, qui met en oeuvre deux capteurs portés par un ou des satellites défilants. L'analyse des données relevées par un premier capteur permet de commander le deuxième capteur pour l'acquisition des données.

Aucune des solutions proposées par l'art antérieur ne permet cependant de garantir l'obtention d'une image complète et satisfaisante d'une zone d'intérêt donnée. Lorsqu'elle est réalisée, une telle obtention nécessite en outre un temps relativement long, et donc financièrement pénalisant.

La présente invention vise à remédier aux inconvénients des solutions proposées par l'art antérieur pour l'observation aérienne / satellitaire de la surface terrestre, notamment aux inconvénients exposés ci-avant, en proposant un procédé, et un dispositif pour sa mise en œuvre, qui permettent d'observer de manière la plus complète possible une zone cible de la surface terrestre, c'est-à-dire d'obtenir des images de bonne résolution, et dépourvues de taches qui sont indésirables pour l'usage auquel ces images sont destinées, de la plus grande partie possible, de préférence de l'intégralité, de la surface de cette zone cible, du moins en cas d'absence de couverture nuageuse ou en cas de couverture nuageuse partielle de cette zone cible.

L'invention vise également à ce que ceci puisse être réalisé le plus rapidement possible, avec le moins d'étapes d'acquisition d'images possible, et qui plus est au moyen de matériel simple.

Afin d'atteindre ces objectifs, la présente invention va à l'inverse des solutions proposées par l'art antérieur.

Les procédés proposés par l'art antérieur pour l'observation d'une zone cible sont en effet tous conçus de sorte à déterminer, pour un satellite (ou un véhicule aérien) d'observation défilant, c'est-à-dire se déplaçant au-dessus de la surface terrestre à une grande vitesse, de plusieurs milliers de km/h, quelles portions de la zone cible doivent être acquises pendant la fenêtre de temps ponctuelle disponible pour l'observation lorsque le satellite passe au-dessus de la zone cible. Ces procédés visent ainsi l'optimisation des images acquises pendant une courte fenêtre de temps ponctuelle disponible pour l'observation, typiquement de quelques dizaines de secondes, lors du passage rapide du satellite au-dessus de la zone cible, de sorte à acquérir le maximum d'images claires de la zone cible pendant ce temps donné. C'est l'accumulation des images acquises à chaque passage du satellite au-dessus de la zone cible qui permet, au fur et à mesure des passages successifs du satellite, d'obtenir une couverture de plus en plus complète de la zone cible.

Alors que les procédés de l'art antérieur fonctionnent ainsi par combinaison d'opportunités d'observation d'une zone qui ne sont pas corrélées entre elles, le procédé selon l'invention prévoit au contraire avantageusement de mettre en œuvre non pas un satellite défilant, mais un ou un couple de véhicule(s) spatial/spatiaux ou aérien(s) qui reste en position quasi-stationnaire au-dessus de la zone cible durant tout le temps nécessaire pour en obtenir une couverture la plus complète possible dans de bonnes conditions d'observation. Le procédé selon l'invention n'est ainsi avantageusement pas dépendant d'une variation aléatoire des conditions d'observation au niveau de la zone cible entre deux passages d'un satellite au-dessus de cette zone. Il tire au contraire parti de cette variation des conditions d'observation pour une zone cible donnée, pour assurer, sans quitter la zone cible de vue, une observation complète de la zone cible en un temps le plus réduit possible, par une optimisation de l'ordre d'acquisition des images des différents secteurs constituant la zone cible en fonction de l'évolution en temps réel de la position d'éléments indésirables sur cette zone cible.

Ainsi, il est proposé selon l'invention un procédé d'acquisition d'images de la surface terrestre, qui comprend des étapes de :
- placement d'une première plateforme aérienne ou spatiale dans une position quasi-stationnaire au-dessus de la surface terrestre, c'est-à-dire, au sens de la présente invention, dans une position stationnaire ou se déplaçant à une vitesse inférieure à 200 km/h au-dessus de la surface terrestre, cette première plateforme comportant un premier système d'acquisition d'images de champ de vue englobant une zone, dite zone d'intérêt, de la surface terrestre ;
- placement d'une deuxième plateforme aérienne ou spatiale dans une position quasi-stationnaire au-dessus de la surface terrestre, c'est-à-dire, au sens de la présente invention, dans une position stationnaire ou se déplaçant à une vitesse inférieure à 200 km/h au-dessus de la surface terrestre, cette deuxième plateforme comportant un deuxième système d'acquisition d'images de champ de vue plus étroit et de meilleure résolution que le premier système d'acquisition d'images, le champ de vue du deuxième système d'acquisition d'images étant orientable de telle sorte que le champ de regard de ce deuxième système d'acquisition d'images englobe la zone d'intérêt ;
- mise en œuvre d'un cycle d'observation comprenant des étapes de :
   a/ acquisition d'une image de la zone d'intérêt par le premier système d'acquisition d'images,
   b/ découpage de l'image ainsi acquise, dite image préalable, en mailles correspondant chacune à un secteur de la zone d'intérêt apte à être englobé dans le champ de vue du deuxième système d'acquisition d'images,
   c/analyse de l'image préalable pour détecter la présence éventuelle de taches représentatives d'éléments indésirables, tels que des nuages, des ombres, le reflet du soleil, ou même, en fonction des usages pour lesquels l'observation de la zone d'intérêt est destinée, des entités mobiles, dans ou au-dessus de la zone d'intérêt,
   d/ identification des mailles de l'image préalable ne comportant aucune tache représentative d'éléments indésirables, ces mailles correspondant à des secteurs dits favorables de la zone d'intérêt,
   e/ et, le cas échéant, si des mailles de l'image préalable ne comportant aucune tache représentative d'éléments indésirables ont été identifiées, acquisition d'une image, dite image finale, d'au moins un, notamment de plusieurs, ou le cas échéant de l'ensemble des, secteur(s) favorable(s) par le deuxième système d'acquisition d'images,
- et, si un taux prédéterminé de secteurs de la zone d'intérêt pour lesquels une image finale a été acquise par le deuxième système d'acquisition d'images n'a pas été atteint, réitération(s) du cycle d'observation jusqu'à ce que ledit taux, dit taux de secteurs à image finale acquise, soit atteint.

La ou les réitération(s) du cycle d'observation sont réalisées sans que la zone d'intérêt ne soit jamais sortie entièrement du champ de vue du premier système d'acquisition d'images et du champ de regard du deuxième système d'acquisition d'images. En d'autres termes, selon l'invention, le premier cycle d'observation et la ou les réitération(s) de ce cycle d'observation sont réalisées au cours d'un même passage de la première plateforme aérienne ou spatiale et de la deuxième plateforme aérienne ou spatiale au-dessus de la zone d'intérêt, la zone d'intérêt étant restée dans le champ de vue du premier système d'acquisition d'images et dans le champ de regard du deuxième système d'acquisition d'images.

Préférentiellement, le taux de secteurs à image finale acquise est égal à 100 %, si bien que le cycle d'observation est réitéré jusqu'à ce que des images de l'ensemble des secteurs de la zone d'intérêt aient été acquises par le deuxième système d'acquisition d'images.

Dans des modes de mise en œuvre particuliers de l'invention, le procédé comprend une étape de validation de la conformité des images finales acquises par le deuxième système d'acquisition d'images par rapport à un ou plusieurs critère(s) préétabli(s), tels que par exemple une absence de taches indésirables sur l'image finale, et, si un taux prédéterminé de secteurs de la zone d'intérêt pour lesquels une image finale a été validée n'a pas été atteint, le procédé comprend la ou les réitération(s) du cycle d'observation jusqu'à ce que ledit taux, dit taux de secteurs à images finales validées, soit atteint. Préférentiellement, ce taux est égal à 100 %, si bien que le cycle d'observation est réitéré jusqu'à ce que des images de l'ensemble des secteurs de la zone d'intérêt aient été acquises par le deuxième système d'acquisition d'images et validées pour leur conformité au(x) critère(s) préétabli(s).

Ainsi, le procédé selon l'invention comprend de préférence, lorsqu'à l'issue du cycle d'observation une image de chacun des secteurs constituant la zone d'intérêt n'a pas été acquise par le deuxième système d'acquisition d'images, ou le cas échéant acquise et validée, la réitération dudit cycle d'observation jusqu'à ce qu'une image de chacun des secteurs de la zone d'intérêt ait été acquise par le deuxième système d'acquisition d'images, ou le cas échéant acquise et validée.

En fonction de l'usage auquel les images de la zone d'intérêt sont destinées, le taux de secteurs à image finale acquise et/ou le taux de secteurs à image finale validée peuvent autrement être choisis à des valeurs inférieures à 100 %. Ils sont notamment définis par l'utilisateur final des images acquises de la zone d'intérêt.

Le champ de vue d'un système d'acquisition d'images s'entend ici, de manière classique, comme le champ que ce système voit à un instant donné. Le champ de regard est quant à lui, de manière également classique, le champ qui est accessible au système d'acquisition d'images, selon les différentes orientations qui sont possibles de son champ de vue.

Les systèmes d'acquisition d'images mis en œuvre selon l'invention sont classiques en eux-mêmes, et fonctionnent de préférence dans les longueurs d'onde du visible et/ou de l'infrarouge. Il peut notamment s'agir de systèmes d'acquisition d'une image fixe, tels qu'un appareil photographique ; ou, en particulier pour le cas du deuxième système d'acquisition d'images, de systèmes d'acquisition d'une vidéo, c'est-à-dire d'une courte série d'images, tels qu'une caméra ; ou encore d'appareils réalisant un autre type de mesure optique, par exemple un interféromètre.

Le premier système d'acquisition d'images présente de préférence un large champ de vue, englobant préférentiellement le champ de regard du deuxième système d'acquisition d'images. Il sera désigné dans la présente description par les termes « système d'acquisition à large champ ». Sa résolution peut ne pas être élevée. Elle peut par exemple être d'environ un dixième de la taille du champ de vue du deuxième système d'acquisition d'images. Le deuxième système d'acquisition d'images présente quant à lui de préférence une haute résolution, par exemple d'environ 1 mètre. Il sera désigné dans la présente description par les termes « système d'acquisition à haute résolution ».

Le deuxième système d'acquisition d'images est de champ de vue orientable, et disposé par rapport au premier système d'acquisition d'images, de telle sorte que le champ de regard du deuxième système d'acquisition d'images se superpose sensiblement avec le champ de vue du premier système d'acquisition d'images sur une grande surface au sol, permettant d'observer au moins 400 km² de surface terrestre. Le champ de vue du deuxième système d'acquisition d'images peut quant à lui être configuré de sorte à permettre par exemple d'observer 1 km² de surface terrestre.

Les étapes b/ et c/ du cycle d'observation selon l'invention peuvent être réalisées selon tout ordre, ou même simultanément.

Préférentiellement, le découpage de l'image préalable est réalisé de telle sorte que chaque secteur de la zone d'intérêt correspondant à une maille occupe sensiblement tout le champ de vue du deuxième système d'acquisition d'images.

Pour l'acquisition des images finales des secteurs favorables, le champ de vue du deuxième système d'acquisition d'images est orienté de manière adéquate, successivement, vers chacun des secteurs concerné, entre deux phases d'acquisition d'image proprement dite.

On entend dans la présente description, par position quasi-stationnaire, le fait que la plateforme aérienne ou spatiale reste en position stationnaire à strictement parler, ou en position quasi-stationnaire, au-dessus d'une zone de la surface terrestre, c'est-à-dire, au sens de la présente invention, qu'elle reste au-dessus de cette zone pendant une durée suffisamment longue pour permettre l'acquisition sensiblement de l'ensemble des secteurs constituant la zone d'intérêt dans de bonnes conditions météorologiques d'absence de couverture nuageuse. Cette durée dépend des conditions climatiques particulières, notamment des conditions de vent, en cours au niveau de la zone d'intérêt, et de la vitesse de déplacement des nuages qui en résulte. Il appartient à l'homme du métier de déterminer cette durée, et la vitesse de déplacement maximale de la plateforme associée, qui assurera que la plateforme reste suffisamment longtemps sur site pour atteindre l'objectif que s'est fixé la présente invention, d'obtenir une image haute résolution dégagée d'un taux prédéterminé élevé de la zone d'intérêt.

Dans le contexte de la présente invention, on considère que la plateforme aérienne ou spatiale est quasi-stationnaire lorsqu'elle se déplace au-dessus de la surface terrestre à une vitesse inférieure à 200 km/h ou qu'elle ne se déplace pas par rapport à la surface terrestre.

Préférentiellement, la première plateforme aérienne ou spatiale se déplace au-dessus de la surface terrestre de manière telle que la zone d'intérêt reste, au moins partiellement et de préférence totalement, dans le champ de vue du premier système d'acquisition d'images pendant au moins 5 minutes, préférentiellement pendant au moins 20 minutes.

Préférentiellement, la deuxième plateforme aérienne ou spatiale se déplace au-dessus de la surface terrestre de manière telle que la zone d'intérêt reste, au moins partiellement et de préférence totalement, dans le champ de regard du deuxième système d'acquisition d'images pendant au moins 5 minutes, préférentiellement pendant au moins 20 minutes.

Dans des variantes de l'invention, on considère autrement que la plateforme aérienne ou spatiale est quasi-stationnaire lorsqu'elle se déplace à n'importe quelle vitesse, y compris à une vitesse supérieure à 200 km/h, par rapport à la zone d'intérêt, mais qu'elle reste toujours sensiblement à l'aplomb de cette zone d'intérêt, par exemple en effectuant des mouvements de va-et-vient ou des cercles au-dessus de cette zone, si bien que le temps de persistance de la plateforme au-dessus de la zone est suffisamment long pour la mise en œuvre du procédé selon l'invention. Ce temps de persistance de la plateforme au-dessus de la zone d'intérêt est de préférence d'au moins 5 minutes, et préférentiellement d'au moins 20 minutes.

Typiquement, pour une zone d'intérêt présentant une couverture nuageuse morcelée de moins de 50 % se déplaçant à au moins 30 km/h, une durée de survol de la zone d'intérêt, au cours de laquelle la zone d'intérêt reste dans le champ de vue du premier système d'acquisition d'images, et dans le champ de regard du deuxième système d'acquisition d'images, d'environ vingt minutes, suffit généralement à assurer que l'ensemble de la zone d'intérêt aura pu être observé par le deuxième système d'acquisition d'images.

La première plateforme et la deuxième plateforme selon l'invention peuvent être distinctes l'une de l'autre.

Dans des variantes de l'invention, elles sont une seule et même plateforme, qui porte à la fois le premier système d'acquisition d'images et le deuxième système d'acquisition d'images.

Le procédé selon l'invention met ainsi en œuvre une ou deux plateforme(s) d'observation aérienne(s) ou spatiale(s) chacune en position que l'on peut qualifier de persistante au-dessus de la zone de la surface terrestre à observer, et équipée(s) des deux systèmes d'observation / acquisition d'images. Un premier système à champ de vue large est utilisé pour estimer les conditions d'observation, telles que la présence de nuages et leurs ombres, les reflets du soleil, etc., en temps réel. Cette estimation permet d'orienter les acquisitions d'images faites par le deuxième système d'observation / acquisition d'images sur les secteurs de la zone d'intérêt où les conditions sont bonnes, ce deuxième système étant quant à lui à haute résolution, de sorte qu'il génère des images de haute qualité. Même en cas de couverture nuageuse de la zone d'intérêt, les conditions d'observation évoluant avec le temps, notamment au fur et à mesure du déplacement des nuages, on obtient par mise en œuvre des cycles d'observation successifs du procédé selon l'invention une acquisition à haute résolution dans de bonnes conditions d'observation en autant de points que souhaité de la zone d'intérêt.

Ceci peut avantageusement être effectué aussi rapidement que cela est possible en fonction des conditions, notamment climatiques, particulières en cours, et au moyen d'un équipement de conception simple.

Le procédé selon l'invention peut en outre répondre à l'une ou plusieurs des caractéristiques décrites ci-après, mises en œuvre isolément ou en chacune des leurs combinaisons techniquement opérantes.

Dans des modes de mise en œuvre particuliers de l'invention, pour au moins un cycle d'observation, de préférence pour tous les cycles d'observation, à l'exception du premier cycle, il n'est pas réalisé d'acquisition d'une image finale par le deuxième système d'acquisition d'images pour les secteurs de la zone d'intérêt pour lesquels une image finale a été acquise, ou le cas échéant acquise et validée, lors d'un cycle d'observation précédent. Une telle caractéristique permet avantageusement d'obtenir d'autant plus rapidement une observation totale de la zone d'intérêt, en évitant les acquisitions d'images finales redondantes.

Lorsque le procédé selon l'invention comprend une étape de validation de la conformité des images finales acquises par le deuxième système d'acquisition d'images, cette conformité est évaluée selon un ou des critère(s) préétabli(s). Cette étape de validation peut être mise en œuvre à l'issue de chaque cycle d'observation, de sorte à permettre une nouvelle acquisition d'images finales pour les secteurs favorables pour lesquels l'image finale précédemment acquise n'a pas été jugée acceptable, lors du cycle d'observation suivant. Elle peut autrement être réalisée à tout moment, l'ensemble des images finales d'un cycle d'observation donné étant considérées acceptables par défaut, puis reclassées le cas échéant comme non acceptables ultérieurement au cours de la mise en œuvre du procédé, les secteurs correspondants étant alors réintégrés dans la liste des secteurs dont une image finale doit encore être acquise.

Cette étape de validation de la conformité des images finales peut aussi bien être réalisée par analyse de ces images finales elles-mêmes, que par analyse de l'image préalable correspondante acquise par le premier système d'acquisition d'images.

Cette analyse peut être réalisée à distance, notamment depuis le sol, ou par un module de validation embarqué sur une des plateformes.

En fonction de l'usage auquel les images de la zone d'intérêt sont destinées, plusieurs configurations peuvent être envisagées selon l'invention. Il peut par exemple être décidé que la ou les plateforme(s) restera(ront) suffisamment longtemps au-dessus de la zone d'intérêt pour que des images finales de l'ensemble des secteurs de la zone d'intérêt aient été acquises, ou le cas échéant acquises et validées. Autrement, il peut être décidé qu'il est acceptable que pour un certain nombre de secteurs de la zone d'intérêt, des images à haute résolution soient acquises même lorsque ces secteurs ne sont pas complètement dégagés, ceci à des fins de gain de temps.

Ainsi, le procédé selon l'invention peut en outre comprendre, après mise en œuvre d'un nombre de cycles d'observation successifs prédéterminé, si l'image finale d'un ou plusieurs secteurs de la zone d'intérêt n'a pas encore pu être acquise, une étape d'acquisition d'images finales, par le deuxième système d'acquisition d'images, de ces secteurs non favorables, de préférence seulement si le taux de couverture nuageuse au-dessus de ces secteurs est supérieur à une valeur seuil prédéterminée.

Dans des modes de mise en œuvre particuliers de l'invention, le procédé comporte, pour au moins un cycle d'observation, de préférence pour tous les cycles d'observation, à l'exception du premier cycle, après l'étape d/, d'identification des mailles de l'image préalable ne comportant aucune tache représentative d'éléments indésirables, une étape de détermination d'un ordre de priorité des secteurs de la zone d'intérêt pour l'acquisition des images par le deuxième système d'acquisition d'images, selon un ou des critère(s) préétabli(s). Ce ou ces critères sont notamment choisis en fonction de l'objectif particulier pour lequel l'observation de la zone de la surface terrestre est destinée.

Dans des modes de mise en œuvre particuliers de l'invention, adaptés aux configurations dans lesquelles la deuxième plateforme aérienne ou spatiale se déplace, à vitesse lente, au-dessus de la surface terrestre, la deuxième plateforme aérienne ou spatiale se déplace à une vitesse inférieure à 200 km/h au-dessus de la surface terrestre, et dans cette étape de détermination d'un ordre de priorité des secteurs de la zone d'intérêt pour l'acquisition des images par le deuxième système d'acquisition d'images, un degré de priorité plus élevé est attribué aux secteurs favorables pour lesquels le temps restant avant leur sortie hors du champ de regard du deuxième système d'acquisition d'images est le plus court, tout en étant supérieur au temps nécessaire pour l'acquisition d'une image dudit secteur par le deuxième système d'acquisition d'images. Ce temps restant peut être déterminé en prenant en compte la direction et la vitesse de déplacement de la deuxième plateforme aérienne ou spatiale au-dessus de la surface terrestre.

Dans des modes de mise en œuvre particuliers de l'invention, l'étape de détermination d'un ordre de priorité des secteurs de la zone d'intérêt pour l'acquisition des images par le deuxième système d'acquisition d'images comprend :
f/ à partir de données de direction et de vitesse de déplacement de chaque élément indésirable dans ou au-dessus de la zone d'intérêt, la détermination pour chaque secteur favorable de la zone d'intérêt pour lequel une image finale n'a pas encore été acquise, ou, le cas échéant, pour certains autres secteurs également, voire pour tous les secteurs, du temps restant avant l'apparition dans ou au-dessus dudit secteur d'un élément indésirable,
g/ le classement desdits secteurs par ordre de priorité pour l'acquisition des images par le deuxième système d'acquisition d'images, un degré de priorité d'autant plus élevé étant attribué aux secteurs favorables pour lesquels le temps restant avant l'apparition d'un élément indésirable est le plus court tout en étant supérieur au temps nécessaire pour l'acquisition d'une image dudit secteur par le deuxième système d'acquisition d'images. Ce temps inclut en particulier le temps nécessaire à l'acquisition d'image proprement dite, ainsi que le temps nécessaire à la réorientation préalable adéquate du champ de vue du deuxième système d'acquisition d'images.

Préférentiellement, dans ce cycle d'observation, il n'est pas réalisé d'étape d'acquisition d'image par le deuxième système d'acquisition d'images pour les secteurs pour lesquels le temps restant avant l'apparition d'un élément indésirable est inférieur ou égal au temps nécessaire pour l'acquisition d'une image dudit secteur par le deuxième système d'acquisition d'images.

Dans de tels modes de mise en œuvre, en assurant que la priorité soit donnée, le cas échéant aux secteurs favorables de la zone d'intérêt qui sortiront les premiers du champ de regard du deuxième système d'acquisition d'images, puis aux secteurs favorables de la zone d'intérêt dans lesquels les conditions d'observation, notamment la couverture nuageuse, vont se dégrader le plus rapidement, le procédé selon l'invention permet avantageusement d'optimiser la durée nécessaire à l'observation complète, dans de bonnes conditions, de la zone d'intérêt.

De préférence, l'étape d'acquisition d'une image finale par le deuxième système d'acquisition d'images n'est réalisée que pour les secteurs favorables pour lesquels le temps restant avant l'apparition d'un élément indésirable est supérieur au temps nécessaire pour l'acquisition d'une image dudit secteur par le deuxième système d'acquisition d'images, additionné d'une marge de sécurité. Il entre dans les compétences de l'homme du métier de déterminer la valeur de cette marge, en fonction notamment des conditions climatiques en cours au niveau de la zone d'intérêt, et en particulier de la précision de connaissance de la vitesse de déplacement des nuages, et, le cas échéant, de la vitesse de déplacement de la deuxième plateforme au-dessus de la zone d'intérêt, pour s'assurer qu'aucun élément indésirable n'apparaitra dans le secteur favorable concerné avant la fin de l'étape d'acquisition d'une image de ce secteur par le deuxième système d'acquisition d'images.

De telles caractéristiques assurent avantageusement que l'observation de la totalité de la zone d'intérêt soit réalisée en un temps optimal, en s'assurant notamment que l'acquisition d'une image finale de chaque secteur favorable soit réalisée tant que ce secteur est dépourvu d'élément indésirable.

Les données de direction et de vitesse de déplacement de chaque élément indésirable, en particulier des nuages et de leurs ombres, dans ou au-dessus de la zone d'intérêt, peuvent être déterminées par tout moyen classique en lui-même, notamment à partir de données météorologiques disponibles pour la zone concernée.

Préférentiellement, le procédé comporte, dans le cycle d'observation concerné, une étape de détermination des données de direction et de vitesse de déplacement de chaque élément indésirable dans ou au-dessus de la zone d'intérêt par :
f1/ comparaison de l'image préalable acquise au cours dudit cycle d'observation avec l'image préalable acquise au cours d'un cycle d'observation précédent,
f2/ détermination, à partir de cette comparaison et de l'intervalle de temps entre les acquisitions d'image préalable respectives desdits deux cycles d'observation, de la direction et de la vitesse de déplacement de chaque élément indésirable dans ou au-dessus de la zone d'intérêt.

Dans des modes de mise en œuvre particuliers de l'invention, l'intervalle de temps entre les étapes a/, d'acquisition d'une image préalable de la zone d'intérêt par le premier système d'acquisition d'images, respectives de deux cycles d'observation successifs est comprise entre 1 seconde et 2 minutes. Elle peut par exemple être d'environ 10 secondes.

Pour l'étape e/ d'acquisition d'une image finale de chacun des secteurs de la zone d'intérêt, la fréquence d'acquisition d'images par le deuxième système d'acquisition d'images est quant à elle de préférence comprise entre 1 et 50 images par seconde, par exemple d'environ 2 images par seconde.

Le procédé selon l'invention peut aussi comprendre une étape de priorisation des secteurs de la zone d'intérêt dont une image doit être acquise par le deuxième système d'acquisition d'images, en fonction de tout critère souhaité, le ou les critères de priorisation dépendant notamment de l'usage auquel les images finales acquises par le procédé selon l'invention sont destinées. Comme exposé ci-avant, lorsque la deuxième plateforme se déplace au-dessus de la zone d'intérêt, les secteurs situés en arrière par rapport à la direction de déplacement de la deuxième plateforme, qui sortiront les premiers du champ de regard du deuxième système d'acquisition d'images, sont de préférence observés en priorité par ce deuxième système.

La première plateforme aérienne ou spatiale et la deuxième plateforme aérienne ou spatiale sont de préférence placées chacune à une altitude supérieure à 10 km au dessus de la zone d'intérêt, préférentiellement d'au moins 18 km. On assure ainsi avantageusement qu'elles se trouvent à une hauteur suffisante pour assurer une large couverture au sol, échapper aux courants venteux qui se situent à des altitudes moindres, et éviter les couloirs aériens des transports de passagers et marchandises.

Ces plateformes peuvent consister en tout engin aérien ou spatial apte à être placé en position quasi-stationnaire, au sens de la présente invention, au-dessus de la surface terrestre, à une altitude supérieure à 10 km, et notamment, pour la deuxième plateforme, à permettre l'accès à haute résolution à tout point d'un large champ de regard durant une longue période de temps.

La première plateforme et/ou la deuxième plateforme peuvent notamment être des ballons.

Il peut autrement s'agir de drones stratosphériques, tels par exemple qu'un pseudo-satellite haute altitude (HAPS) tel que le Zephyr d'Airbus Defence and Space. Un tel pseudo-satellite, évoluant de manière classique dans la stratosphère, à plus de 20 km d'altitude au-dessus de la surface terrestre, présente notamment les avantages d'une alimentation solaire, et d'un coût de fonctionnement limité, en particulier par rapport aux satellites classiques. Dans un tel cas, il est tout à fait avantageux dans le cadre de l'invention que le premier système d'acquisition d'images et le deuxième système d'acquisition d'images soient situés sur la même plateforme.

La première plateforme et/ou la deuxième plateforme peuvent autrement être des satellites géostationnaires. Dans une telle configuration en particulier, on peut aussi bien envisager selon la présente invention que le premier système d'acquisition d'images et le deuxième système d'acquisition d'images soient situés sur la même plateforme, ou qu'ils soient situés sur des plateformes différentes.

En particulier, lorsque la deuxième plateforme selon l'invention est un satellite géostationnaire, on peut tout à fait prévoir dans le cadre de l'invention que la première plateforme soit constituée par un satellite géostationnaire équipé d'un premier système d'acquisition d'images classique en lui-même, déjà en orbite pour d'autres missions, tel qu'un satellite Météosat.

Alors, le procédé selon l'invention peut comprendre, pour chaque image préalable acquise par le système d'acquisition d'images large champ équipant de manière classique de tels satellites, une étape de transmission de cette image préalable à un système d'analyse d'images et de contrôle du deuxième système d'acquisition d'images pour la mise en œuvre du cycle d'observation selon l'invention.

Le premier système d'acquisition d'images peut être configuré de sorte à ce que son champ de vue soit fixe ou orientable selon différents angles en direction de la surface terrestre.

Dans des modes de mise en œuvre particuliers de l'invention, l'étape b/ de découpage en mailles de l'image préalable est réalisée de sorte à ce que les mailles contigües se recouvrent au niveau de leurs bords périphériques. On évite ainsi avantageusement toute discontinuité entre les images de secteurs contigus de la zone d'intérêt, ce qui assure que la zone d'intérêt puisse être observée en tout point.

Le procédé selon l'invention peut mettre en œuvre simultanément un seul, ou une pluralité, de deuxièmes systèmes d'acquisition d'images, répondant et fonctionnant chacun selon l'une ou plusieurs des caractéristiques décrites ci-avant. Ces deuxièmes systèmes d'acquisition d'images sont de préférence portés par la même deuxième plateforme.

Ces deuxièmes systèmes d'acquisition d'images peuvent être utilisés pour acquérir, à des moments différents d'un même cycle d'observation, une image du même secteur favorable, de sorte à obtenir des données redondantes pour ce secteur, augmentant par là-même la fiabilité du procédé ; ou pour acquérir, au même moment, des images de secteurs favorables différents de la zone d'intérêt ; ou encore pour acquérir, au même moment, des images du même secteur favorable par des angles de vue différents, permettant ainsi d'obtenir une représentation tridimensionnelle de ce secteur.

Dans des modes de mise en œuvre particuliers de l'invention, le procédé comporte en outre une étape de déplacement de la ou des plateforme(s) au-dessus d'une zone différente de la surface terrestre lorsque des images de l'ensemble des secteurs de la zone d'intérêt ont été acquises par le deuxième système d'acquisition d'images. Les étapes du procédé peuvent alors être mises en œuvre, de manière similaire à celle décrite ci-avant, pour une nouvelle zone d'intérêt.

Lorsque la première et/ou la deuxième plateforme sont des satellites géostationnaires, le procédé peut comporter, lorsque des images de l'ensemble des secteurs de la zone d'intérêt ont été acquises par le deuxième système d'acquisition d'images, une étape de pointage des systèmes d'acquisition d'images vers une zone différente de la surface terrestre, pour mise en œuvre du procédé selon l'invention pour cette nouvelle zone.

Les différentes étapes du procédé selon l'invention mettant en œuvre l'analyse d'image et la commande du fonctionnement des systèmes d'acquisition d'images sont de préférence réalisées à bord de la plateforme elle-même. Autrement, elles peuvent être réalisées à distance, en particulier depuis une station de commande au sol. Ces étapes peuvent avantageusement être réalisées de manière entièrement automatique, sur la base de critères préalablement définis par un opérateur.

Lorsque le procédé selon l'invention met en œuvre, en tant que première plateforme, un satellite géostationnaire déjà en orbite pour d'autres missions, tel qu'un satellite Météosat, la commande pour la mise en œuvre du procédé selon l'invention peut comprendre la commande du placement de la première plateforme et/ou de l'acquisition d'image par le premier système d'acquisition d'images porté par cette première plateforme ; ou encore l'identification du satellite géostationnaire se trouvant déjà en position adéquate pour la mise en œuvre du procédé selon l'invention ; et/ou encore l'identification de l'image préalable prise par le premier système d'acquisition d'images pour un autre usage, qui est adéquate pour la mise en œuvre d'un cycle d'observation donné du procédé selon l'invention, et l'obtention de cette image préalable.

La présente invention concerne également un produit programme d'ordinateur comportant un ensemble d'instructions de code de programme qui, lorsqu'elles sont exécutées par un processeur, conduisent le dispositif selon l'invention à mettre en œuvre un procédé d'acquisition d'images de la surface terrestre selon l'invention.

Selon un autre aspect, l'invention concerne un dispositif pour l'acquisition d'images de la surface terrestre. Ce dispositif comporte :
- une première plateforme aérienne ou spatiale configurée pour pouvoir être maintenue dans une position quasi-stationnaire au-dessus de la surface terrestre, c'est-à-dire pour pouvoir être maintenue dans une position stationnaire au-dessus de la surface terrestre ou se déplacer à une vitesse inférieure à 200 km/h au-dessus de la surface terrestre, cette première plateforme comportant un premier système d'acquisition d'images configuré de sorte à ce que son champ de vue puisse englober une zone de la surface terrestre, dite zone d'intérêt, lorsque la première plateforme est placée au-dessus de la surface terrestre ;
- une deuxième plateforme aérienne ou spatiale configurée pour pouvoir être maintenue dans une position quasi-stationnaire au-dessus de la surface terrestre, c'est-à-dire pour pouvoir être maintenue dans une position stationnaire au-dessus de la surface terrestre ou se déplacer à une vitesse inférieure à 200 km/h au-dessus de la surface terrestre, cette deuxième plateforme comportant un deuxième système d'acquisition d'images présentant un champ de vue plus étroit et une meilleure résolution que le premier système d'acquisition d'images, le champ de vue du deuxième système d'acquisition d'images étant orientable et le deuxième système d'acquisition d'images étant configuré de telle sorte que son champ de regard puisse englober la zone d'intérêt englobée dans le champ de vue du premier système d'acquisition d'images lorsque la deuxième plateforme est placée au-dessus de la zone d'intérêt ;
- un système d'analyse d'images et de contrôle du premier système d'acquisition d'images et du deuxième système d'acquisition d'images pour la mise en œuvre des étapes du cycle d'observation d'un procédé selon l'invention, et la ou les réitération(s) éventuelle(s) de ce cycle d'observation.

Les plateformes et leurs éléments constitutifs peuvent répondre à l'une ou plusieurs des caractéristiques décrites ci-avant en référence au procédé d'acquisition d'images selon l'invention.

Dans des modes de réalisation particuliers de l'invention, la première plateforme et la deuxième plateforme sont une seule et même plateforme.

Dans d'autres modes de réalisation de l'invention, elles sont distinctes l'une de l'autre, notamment lorsqu'il s'agit de satellites géostationnaires.

Le système d'analyse d'images et de contrôle du premier système d'acquisition d'images et du deuxième système d'acquisition d'images peut comprendre un module de validation de la conformité des images finales acquises par le deuxième système d'acquisition d'images, par rapport à un ou plusieurs critère(s) préétabli(s).

Le système d'analyse d'images et de contrôle du premier système d'acquisition d'images et du deuxième système d'acquisition d'images pour la mise en œuvre des étapes du/des cycle(s) d'observation d'un procédé selon l'invention peut être disposé dans une plateforme elle-même, ou dans une station de commande à distance, notamment au sol, ou encore pour partie dans une plateforme et pour partie dans une ou plusieurs stations de commande à distance.

Dans des modes de réalisation particuliers de l'invention, le système d'analyse d'images et de contrôle comprend
- un module d'analyse d'images pour la détection de taches sur chaque image préalable acquise par le premier système d'acquisition d'images, le découpage de l'image préalable en mailles et l'identification des mailles ne comportant aucune tache représentative d'un élément indésirable dans ou au-dessus de la zone d'intérêt,
- et un module de commande du premier système d'acquisition d'images et du deuxième système d'acquisition d'images pour l'acquisition d'images. Cette commande inclut notamment le déclenchement et l'arrêt de la prise d'images par chaque système, ainsi que l'orientation du champ de vue du deuxième système d'acquisition d'images.

Le système d'analyse d'images et de contrôle comprend de préférence en outre un module de calcul configuré pour déterminer, pour au moins un, de préférence pour chaque cycle d'observation, un ordre de priorité des secteurs de la zone d'intérêt pour l'acquisition des images par le deuxième système d'acquisition d'images, selon un ou plusieurs critère(s) préétablis, notamment en prenant en compte la direction et la vitesse de déplacement de la deuxième plateforme aérienne ou spatiale au-dessus de la surface terrestre, et/ou notamment par :
- à partir de données de direction et de vitesse de déplacement de chaque élément indésirable au-dessus de la zone d'intérêt, détermination pour au moins chaque secteur favorable de la zone d'intérêt pour lequel une image finale n'a pas encore été acquise, du temps restant avant l'apparition d'un élément indésirable,
- classement desdits secteurs par ordre de priorité pour l'acquisition des images par le deuxième système d'acquisition d'images, un degré de priorité d'autant plus élevé étant attribué aux secteurs favorables pour lesquels le temps restant avant l'apparition d'un élément indésirable est le plus court tout en étant supérieur au temps nécessaire pour l'acquisition d'une image dudit secteur par le deuxième système d'acquisition d'images.

Préférentiellement, le module de calcul est configuré pour réaliser, pour au moins un, de préférence pour chaque, cycle d'observation, à l'exception de premier cycle d'observation, la comparaison de l'image préalable acquise au cours dudit cycle d'observation avec l'image préalable acquise au cours d'un cycle observation précédent, et la détermination, à partir de ladite comparaison et de l'intervalle de temps entre les acquisitions d'image préalable respectives desdits deux cycles d'observation, de la direction et de la vitesse de déplacement de chaque élément indésirable au-dessus de la zone d'intérêt.

Un autre aspect de l'invention réside dans un procédé de commande à distance d'un dispositif selon l'invention pour l'acquisition d'images de la surface terrestre, pour la mise en œuvre de l'ensemble des étapes d'un procédé d'acquisition d'images de la surface terrestre selon l'invention. Selon ce procédé de commande à distance, le dispositif pour l'acquisition d'images de la surface terrestre est commandé à distance par un dispositif de commande, en particulier au sol, des signaux de commande étant successivement déterminés et envoyés au dispositif pour l'acquisition d'images de la surface terrestre par ce dispositif de commande, pour la réalisation desdites étapes.

Un exemple qui n'est pas couvert par l'invention concerne un dispositif de commande qui comporte des moyens configurés pour commander, de préférence à distance, notamment depuis la surface terrestre, un dispositif pour l'acquisition d'images de la surface terrestre, répondant à l'une ou plusieurs des caractéristiques décrites ci-avant, par transmission de signaux de commande successifs audit dispositif pour l'acquisition d'images de la surface terrestre, pour réaliser des étapes du procédé selon l'invention d'acquisition d'images de la surface terrestre.

Ce dispositif de commande, notamment de commande au sol, est classique en lui-même et peut comporter une ou plusieurs antennes pour recevoir des signaux du dispositif pour l'acquisition d'images de la surface terrestre, et émettre des signaux d'instructions en direction de ce dernier. Il peut comprendre des ordinateurs et moyens de traitement et de stockage des données reçues du dispositif pour l'acquisition d'images de la surface terrestre. Ce dernier est notamment de préférence équipé d'un module de commande, comportant notamment un ou plusieurs processeurs, asservi à un module de communication coopérant avec le dispositif de commande.

Les caractéristiques et avantages de l'invention apparaîtront plus clairement à la lumière des exemples de mise en œuvre ci-après, fournis à simple titre illustratif et nullement limitatifs de l'invention, avec l'appui des figures 1 à 4, dans lesquelles :
- la figure 1 représente de manière schématique une plateforme selon un mode de réalisation particulier de l'invention ;
- la figure 2 montre un diagramme bloc illustrant les principales étapes d'un procédé selon un mode de mise en œuvre de l'invention ;
- la figure 3 illustre les étapes de découpage en mailles d'images préalables acquises lors de cycles d'observation successifs et de priorisation des secteurs de la zone d'intérêt pour l'acquisition d'images par le système d'acquisition d'images à haute résolution, d'un procédé selon un mode de mise en œuvre particulier de l'invention ;
- et la figure 4 illustre l'étape de découpage en mailles d'une image préalable acquise lors d'un cycle d'observation et de priorisation des secteurs de la zone d'intérêt pour l'acquisition d'images par le système d'acquisition d'images à haute résolution, d'un procédé selon un mode de mise en œuvre particulier plus sophistiqué de l'invention.

Dans cet exemple, on considère le cas où le premier système d'acquisition d'images et le deuxième système d'acquisition d'images sont portés par une seule et même plateforme aérienne ou spatiale 10, un tel mode de réalisation n'étant cependant nullement limitatif de l'invention.

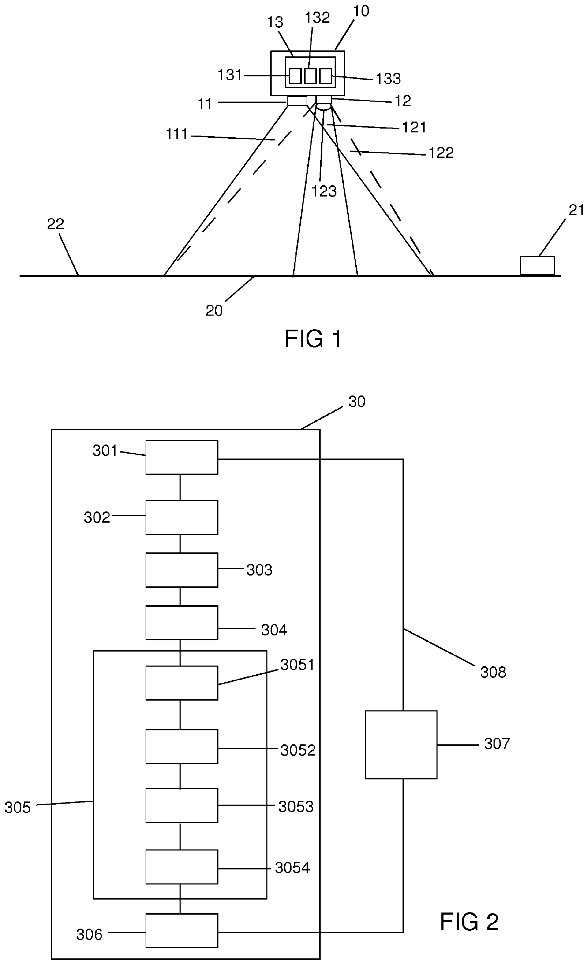

Un exemple de telle plateforme aérienne ou spatiale 10 pouvant être mise en œuvre dans le cadre d'un procédé selon l'invention, pour l'acquisition d'images d'une zone d'intérêt 20 de la surface terrestre 22, est montré sur la figure 1.

Cette plateforme 10 peut être de tout type apte à être placé en position quasi-stationnaire, c'est-à-dire notamment en ne se déplaçant pas ou en se déplaçant à une vitesse inférieure à 200 km/h, au-dessus de la zone d'intérêt 20. Il s'agit préférentiellement d'un pseudo-satellite haute altitude tel que le Zéphyr d'Airbus Defence and Space, ou d'un satellite géostationnaire.

La plateforme 10 est maintenue à une altitude supérieure à 10 km au-dessus de la zone d'intérêt 20.

La plateforme 10 est équipée de deux systèmes d'acquisition d'image distincts qui sont configurés pour regarder vers la zone d'intérêt 20 lorsque la plateforme 10 se trouve sensiblement à l'aplomb de cette zone.

Un premier système d'acquisition d'images 11, dit «système large champ », présente un champ de vue 111 suffisamment large pour englober la zone d'intérêt 20 lorsque la plateforme 10 se trouve sensiblement à l'aplomb de cette zone. Lorsque la plateforme 10 est un pseudo-satellite haute altitude, il peut par exemple s'agir d'une caméra de 70° de champ de vue équipée d'un détecteur de 4 megapixels, délivrant des images d'environ 15 m de résolution. Lorsque la plateforme 10 est un satellite géostationnaire il peut par exemple s'agir d'un instrument météorologique en orbite géostationnaire, de 500m de résolution.

Un deuxième système d'acquisition d'images 12 (dit « système haute résolution ») présente un champ de vue 121 plus étroit mais une plus haute résolution que le système large champ 11. Ce champ de vue 121 est pointable selon divers axes en direction de la zone d'intérêt 20, de telle sorte que le champ de regard 122 du système haute résolution, illustré en pointillés sur la figure 1, englobe également la zone d'intérêt 20 dont il est souhaité obtenir des images. L'orientation du champ de vue 121 du système haute résolution 12 peut notamment être réalisée par un système de miroirs 123, représenté schématiquement sur la figure 1, classique en lui-même. Lorsque la plateforme 10 est un pseudo-satellite haute altitude, il peut par exemple s'agir d'une caméra de 3° de champ de vue équipée d'un détecteur de 30 megapixels, délivrant des images d'environ 0,2 m de résolution, et placée sur un système de pointage permettant d'orienter la ligne de visée à +/- 30° selon le tangage et le roulis. Lorsque la plateforme 10 est un satellite géostationnaire, il peut par exemple s'agir d'un télescope spatial de 4 m de résolution sur un champ de 10 000 km².

La plateforme 10 peut aussi intégrer un système 13 d'analyse d'images et de contrôle du système large champ 11 et du système haute résolution 12.

Ce système 13 d'analyse d'images et de contrôle comporte par exemple au moins un processeur et au moins une mémoire électronique dans laquelle est mémorisé un produit programme d'ordinateur, sous la forme d'un ensemble d'instructions de code de programme à exécuter pour mettre en œuvre les différentes étapes d'un procédé d'acquisition d'images de la surface terrestre selon l'invention. Ces étapes seront décrites de manière détaillée plus loin dans la présente description.

Dans une variante, le système d'analyse 13 d'images et de contrôle comporte également un ou des circuits logiques programmables, de type FPGA, PLD, etc., et/ou circuits intégrés spécialisés (ASIC) adaptés à mettre en œuvre tout ou partie desdites étapes du procédé de commande. En d'autres termes, le système 13 d'analyse d'images et de contrôle comporte un ensemble de moyens configurés de façon logicielle (produit programme d'ordinateur spécifique) et/ou matérielle (FPGA, PLD, DSP, ASIC, etc.) pour mettre en œuvre les différentes étapes d'un procédé d'acquisition d'images de la surface terrestre selon l'invention.

Le système 13 d'analyse d'images et de contrôle comporte de préférence un module 131 d'analyse d'images permettant de :
- détecter, sur des images données, des taches attribuables à des éléments indésirables dans le secteur de la zone d'intérêt correspondant,
- découper les images en mailles de dimensions prédéterminées,
- et identifier des mailles ne comportant aucune tache attribuable à un élément indésirable.

Il comporte en outre de préférence un module 132 de commande du système large champ 11 et du système haute résolution 12 pour l'acquisition d'images, notamment de la zone d'intérêt 20 de la surface terrestre 22. Cette commande inclut notamment le déclenchement et l'arrêt de la prise d'images par chaque système, ainsi que l'orientation du champ de vue 121 du système haute résolution 12.

Le système 13 d'analyse d'images et de contrôle peut également comprendre un module de calcul 133 configuré pour déterminer un ordre de priorité des secteurs de la zone d'intérêt 20 pour l'acquisition des images par le système haute résolution, en fonction de critères prédéterminés et/ou selon des modes de détermination préétablis, notamment en fonction de données météorologiques concernant la zone d'intérêt 20, et le cas échéant en fonction de données de direction et vitesse de déplacement de la plateforme aérienne 10 au-dessus de la zone d'intérêt 20.

Ce module de calcul 133 est de préférence apte à réaliser la comparaison de plusieurs images prises successivement de la zone d'intérêt 20, pour y pister des éléments indésirables en mouvement et déterminer leur vitesse de déplacement.

Le système 13 d'analyse d'images et de contrôle peut autrement être placé dans une station de commande à distance au sol.

Dans tous les cas, il peut avantageusement être configuré pour fonctionner de manière entièrement automatique, sur la base de consignes de fonctionnement prédéfinies par un opérateur.

Pour la mise en œuvre du procédé selon l'invention, les mouvements de la plateforme 10 peuvent être commandés à distance par un dispositif de commande 21, notamment au sol, de manière classique en elle-même.

Ce dispositif de commande à distance 21 peut être configuré pour piloter les différentes phases mises en œuvre par la plateforme 10. A cet effet, le dispositif de commande 21 et la plateforme 10 comportent chacun des moyens conventionnels de communication à distance. Le dispositif de commande 21 est notamment adapté à déterminer des signaux de commande qui sont envoyés à la plateforme 10.

Les principales étapes d'un procédé selon un mode de mise en œuvre particulier de l'invention sont illustrées sur la figure 2, sous forme d'un diagramme-blocs.

Ce procédé comprend une succession de cycles d'observation 30, qui sont mis en œuvre alors que la plateforme 10 reste en position quasi-stationnaire au-dessus de la zone d'intérêt 20. Chaque cycle d'observation 30 comprend les différentes étapes suivantes.

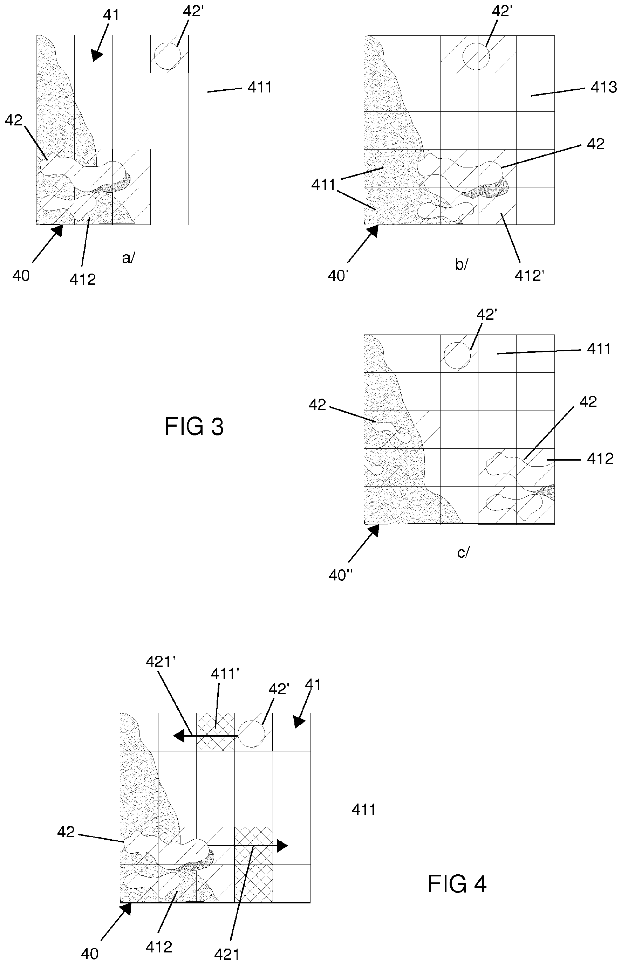

Dans une première étape, il est réalisé l'acquisition 301 d'une image de la zone d'intérêt 20 par le système large champ 11. On obtient alors une image 40, à basse résolution, de la zone d'intérêt 20. Un exemple d'une telle image 40 est illustré de manière schématique en a/ sur la figure 3. Cette image représente une zone d'intérêt comprenant une étendue d'eau (en blanc sur la figure) et une étendue de terre (en grisé sur la figure).

Le cycle d'observation 30 comprend ensuite deux étapes pouvant être mises en œuvre successivement, dans n'importe quel ordre, ou simultanément, l'ordre de présentation montré sur la figure 3 n'étant nullement limitatif de l'invention.

Une de ces étapes consiste dans le découpage 302 de l'image 40 acquise par le système large champ, dite image préalable, en une pluralité de mailles 41 correspondant chacune à un secteur de la zone d'intérêt 20 apte à être englobé dans le champ de vue 121 du système haute résolution 12. Dans l'exemple particulier représenté sur la figure 3, l'image préalable 40 est découpée selon un quadrillage régulier, en mailles 41 correspondant chacune à la surface du champ de vue 121 du système haute résolution 12. Un tel exemple de découpage n'est cependant nullement limitatif de l'invention. Le découpage est de préférence réalisé de telle sorte que les mailles 40 contigües se recouvrent au niveau de leurs bords périphériques, de sorte à s'assurer que la zone d'intérêt 20 sera bien observée en tout point.

Une autre de ces étapes consiste en l'analyse 303 de l'image préalable 40 pour y détecter la présence éventuelle de taches représentatives d'éléments indésirables dans ou au-dessus de la zone d'intérêt 40. Dans l'exemple particulier représenté sur la figure 3, sont représentées deux types de taches : des taches 42 représentatives de nuages et leurs ombres, et une tache 42' représentative du reflet du soleil sur l'eau.

Sur le diagramme de la figure 3, l'étape de découpage 302 est représentée avant l'étape d'analyse 303. Un tel ordre n'est cependant nullement limitatif de l'invention. Ces deux étapes peuvent tout aussi bien être réalisées dans l'ordre inverse, ou simultanément.

Dans une étape suivante, le cycle d'observation 30 comprend l'identification 304 des mailles 411 de l'image préalable 40 ne comportant aucune tache représentative d'éléments indésirables. Ces mailles 411, représentées sans motif sur la figure 3, correspondent à des secteurs dits favorables de la zone d'intérêt 20. Les mailles 412 comportant une tache 42 ou 42' représentative d'élément indésirable sont quant à elles représentées en motif strié sur la figure 3.

Le cycle d'observation 30 peut alors optionnellement comporter une étape 305 de détermination d'un ordre de priorité des secteurs de la zone d'intérêt 20 pour l'acquisition des images par le système haute résolution 12, en fonction de critères prédéterminés. Un de ces critères peut notamment être le temps restant avant la sortie de chaque secteur hors du champ de regard du système haute résolution 12. Un autre de ces critères peut être le temps restant avant l'apparition dans chaque secteur d'un élément indésirable.

Le cycle d'observation peut alors par exemple tout d'abord comprendre une étape 3051 de comparaison de deux images préalables 40 prises dans différents cycles d'observation 30, puis, à partir des informations tirées de cette comparaison, et de l'intervalle de temps connu entre les acquisitions d'image préalable 40 respectives des deux cycles d'observation 30, la détermination 3052 de la direction et de la vitesse de déplacement de chaque élément indésirable au-dessus de la zone d'intérêt 20.

A partir des données ainsi obtenues, le procédé peut alors comprendre :
- la détermination 3053, pour chaque secteur favorable de la zone d'intérêt 20, du temps restant avant l'apparition d'un élément indésirable,
- puis le classement 3054 desdits secteurs par ordre de priorité pour l'acquisition des images par le système haute résolution. Un degré de priorité plus élevé est ainsi attribué aux secteurs favorables pour lesquels le temps restant avant l'apparition d'un élément indésirable est le plus court. Ce temps doit toute fois être supérieur au temps nécessaire pour l'acquisition d'une image par le système haute résolution 12.

Le procédé selon l'invention permet ainsi avantageusement de prioriser l'acquisition d'images, par le système haute résolution 12, pour les secteurs dans ou au-dessus desquels il ne figure aucun élément indésirable tel que des nuages ou le reflet du soleil. Parmi ces secteurs dits favorables, il affecte en outre un ordre de priorité aux secteurs pour lesquels la situation va se dégrader le plus vite, en fonction des mouvements des éléments indésirables en cours. L'ensemble de ces priorisations permet d'acquérir des images de la totalité de la zone d'intérêt 20 aussi rapidement que les conditions d'observation, notamment les conditions météorologiques, le permettent.

Le cas échéant, un degré de priorité plus élevé encore est attribué aux secteurs favorables situés en bord du champ de regard du système haute résolution 12, pour lesquels le temps restant avant leur sortie hors de ce champ de regard est le plus court.

Dans une étape suivante, le cycle d'observation comprend l'acquisition 306 d'une image, dite image finale, de plusieurs, et si possible de la totalité, des secteurs favorables par le système haute résolution 12, selon l'ordre de priorité défini précédemment.

Le cycle d'observation 30 comprend alors une étape d'analyse 307, visant à d'une part valider les images finales venant d'être acquises, et d'autre part à vérifier si un taux prédéterminé de secteurs de la zone d'intérêt 20 pour lesquels une image finale a été acquise par le système haute résolution et validée a ou non été atteint. Ce taux est préférentiellement de 100 %.

Si ce n'est pas le cas, le procédé selon l'invention comprend la réitération 308 du cycle d'observation 30 autant de fois que nécessaire, jusqu'à que ce taux soit atteint. Préférentiellement, les secteurs de la zone d'intérêt 20 pour lesquels une image finale a déjà été acquise et validée, ne sont pas soumis à acquisition d'image par le système haute résolution 12 lors des cycles d'observation 30 suivants.

On obtient à l'issue de ce procédé une image dégagée de l'intégralité de la zone d'intérêt 20.

Si la couverture nuageuse de la zone d'intérêt ne l'avait pas permis, en fonction du temps qu'il aurait été souhaité de consacrer à l'acquisition d'images à haute résolution de cette zone d'intérêt, il aurait pu être décidé selon l'invention de réaliser moins de cycles d'observation, et de se contenter d'un taux inférieur à 100 % d'images finales dépourvues de taches indésirables. Dans tous les cas, pour un résultat donné, en termes de surface de la zone d'intérêt pour laquelle une image à haute résolution parfaitement dépourvus de taches indésirables a pu être acquise, le temps mis pour obtenir ce résultat au moyen du procédé selon l'invention est inférieur à celui qu'auraient nécessité les procédés de l'art antérieur.

La figure 3 illustre de manière schématique des images préalables 40, 40' et 40" successives acquises par le système large champ 11 conformément à l'invention.

Sur la première image 40, montrée en a/ comme il a été exposé précédemment, on observe la présence de taches 42, 42 ' représentatives d'éléments qui sont indésirables pour une observation satisfaisante de la zone d'intérêt 20. Ces taches correspondent respectivement à des nuages et leurs ombres et au reflet du soleil. Conformément au procédé selon l'invention, comme il a été exposé précédemment, dans le cycle d'observation en cours, seuls les secteurs correspondant aux mailles 411 ne présentant pas de tache indésirable sont soumis à acquisition d'image par le système haute résolution 12. Les secteurs correspondant aux mailles 412 présentant une telle tache, indiquées par un motif strié sur la figure, ne sont quant à eux par observés par le système haute résolution 12.

Au cycle d'observation 30 suivant, on obtient une image préalable 40' différente de l'image préalable 40. Comme on peut le voir en b/ sur la figure 3, les taches représentatives d'éléments indésirables se sont déplacées. Dans ce nouveau cycle d'observation 30, les secteurs correspondant aux mailles 413 pour lesquels une image a été acquise par le système haute résolution 12 au cycle précédent et validée ne sont pas à nouveau observés. Les secteurs correspondant aux mailles 412' présentant une tache indésirable ne sont pas observés non plus. Seuls le sont les secteurs correspondant aux mailles 411 ne comportant pas de tache, qui n'ont pas été observés par le système haute résolution 12 au cycle précédent.

Dans l'exemple particulier illustré sur la figure 3, à ce stade, toutes les mailles 41 ont donné lieu à observation par le système haute résolution 12 du secteur correspondant, sauf une. Cette maille 411 est identifiée sur l'image 40" montrée en c/ sur la figure. Du fait du déplacement de la tache 42' représentative du reflet du soleil, cette maille 411 est maintenant dénuée de tache indésirable. Le secteur correspondant peut donc être soumis, dans le 3^{ème} cycle d'observation 30, à acquisition d'image par le système haute résolution 12.

A l'issue des trois cycles, l'ensemble des secteurs de la zone d'intérêt 20 ont été observés, dans des conditions d'observation satisfaisantes, par le système haute résolution 12. Pour l'exemple particulier illustré sur la figure 3, ceci a été réalisé très rapidement.

La figure 4 illustre une image préalable 40 acquise lors d'un cycle d'observation 30, pour un mode de mise en œuvre plus sophistiqué du procédé selon l'invention.

On y retrouve les mailles 41, dont certaines contiennent des taches indésirables 42, 42'. Les mailles 411, représentées sans motif sur la figure, correspondent aux secteurs favorables. Parmi ces mailles favorables, on repère les mailles les plus favorables 411', indiqués en motif quadrillé sur la figure, correspondant aux secteurs de la zone d'intérêt 20 pour lesquels les conditions vont se dégrader le plus rapidement, et qu'il convient d'observer en priorité par le système haute résolution 12. Ces mailles 411' ont avantageusement été identifiées par le procédé selon l'invention, à partir notamment d'une extrapolation du déplacement des éléments indésirables 42, 42', en prenant en particulier en compte leur direction de déplacement respectif 421, 421'.

Des exemples particuliers de mise en œuvre du procédé selon l'invention sont décrits ci-après.

### Exemple 1

Dans cet exemple, la plateforme est un HAPS à 20 km d'altitude disposant d'un système d'acquisition d'images haute résolution (résolution au sol GSD = 0,2 m) dont le champ de vue de 1,2x1,2 km peut accéder à tout point de son champ de regard de 20x20 km à une cadence de 2 Hz (comprenant le temps nécessaire au changement d'axe de visée, le temps de stabilisation et le temps d'acquisition d'image en elle-même). Ce champ de regard est entièrement couvert par un système d'acquisition d'images large champ de résolution au sol GSD = 15 m. Les deux systèmes sont par exemple multi spectraux dans le visible.

Le HAPS se déplace par rapport au sol à une vitesse 10 m/s vers le nord.

Les nuages présents dans le champ de regard du système haute résolution se déplacent par rapport au sol à une vitesse de 20 m/s vers l'est.

Le champ de regard de l'instrument haute résolution est subdivisé en 400 mailles carrées connexes chacune de dimensions 1x1 km. L'objectif est d'acquérir des images haute résolution du plus grand nombre de mailles possible, et même de la totalité, dans de bonnes conditions d'observation, c'est-à-dire sans nuage ou ombre de nuage, et sans réflexion du soleil. Le champ de vue du système haute résolution est plus large qu'une maille, ce qui permet un recouvrement et la fusion des mailles en une mosaïque continue par post-traitement.

La zone d'intérêt de la surface terrestre est une sous-partie du champ de regard du système à haute résolution.

Les cycles d'observation du procédé selon l'invention se succèdent toutes les 10 s, et comprennent :
- l'acquisition de l'ensemble de la zone correspondant au champ de regard du système haute résolution par le système large champ et l'estimation des conditions d'observation de chaque maille ;
- la priorisation des mailles, selon les critères suivants :
   o priorité à celles non acquises, puis à celles déjà acquises mais non validées,
   ∘ puis au sein de ces sous-groupes, priorité à celles qui seront très bientôt non visibles, qui se situent ici en bordure sud du champ,
   ∘ puis au sein de ces sous-groupes, hiérarchisation en fonction à la fois de la qualité des conditions d'observation (absence de défaut, proximité du nadir) et de l'imminence de l'arrivée d'un défaut (déplacement des nuages vers l'est, etc.) ;
- acquisition des 20 mailles (à une fréquence d'acquisition de 2 Hz) jugées prioritaires ;
- validation des mailles acquises dans des conditions satisfaisantes (soit en fonction de l'estimation de couverture sur l'image préalable acquise par le système large champ, soit par une nouvelle estimation sur l'image acquise à haute résolution).

Après 100 s, le champ de regard du système haute résolution s'est déplacé d'une distance correspondant à une maille et les nuages se sont déplacés de 2 mailles.

Après 1000 s, le champ de regard du système haute résolution s'est déplacé de moitié et les nuages ont entièrement traversé ce champ de regard.

L'acquisition haute résolution de l'intégralité de la zone d'intérêt a été réalisée.

### Exemple 2

Dans cet exemple, la plateforme est un satellite géostationnaire, disposant d'un système haute résolution (de résolution au sol GSD 4 m) dont le champ de vue de 100x100 km peut accéder à tout point du champ de regard circulaire d'un rayon au sol d'environ 8000 km à une cadence d'une image toutes les 45 s.

Ce champ de regard est entièrement couvert par un système large champ de résolution au sol GSD d'environ 500 m, intégré ou porté par un satellite météorologique, capable d'acquérir une image toutes les 15 min.

La zone d'intérêt est une sous-partie du champ de regard du système haute résolution. Elle est subdivisée en cellules connexes 90x90 km. Le procédé est alors mis en œuvre comme décrit dans l'exemple 1, avec des cycles d'observation d'une durée de 15 min.

## Revendications

1. Procédé d'acquisition d'images de la surface terrestre (22), comprenant des étapes de :
- placement d'une première plateforme aérienne ou spatiale au-dessus de ladite surface terrestre (22), ladite première plateforme comportant un premier système d'acquisition d'images (11) de champ de vue (111) englobant une zone (20), dite zone d'intérêt, de ladite surface terrestre (22),
- placement d'une deuxième plateforme aérienne ou spatiale au-dessus de ladite surface terrestre (22), ladite deuxième plateforme comportant un deuxième système d'acquisition d'images (12) de champ de vue (121) plus étroit et de meilleure résolution que le premier système d'acquisition d'images (11), le champ de vue (121) dudit deuxième système d'acquisition d'images (12) étant orientable de telle sorte que le champ de regard (122) dudit deuxième système d'acquisition d'images (12) englobe ladite zone d'intérêt (20),
- mise en œuvre d'un cycle d'observation (30) comprenant des étapes de :
a/ acquisition (301) d'une image (40) de ladite zone d'intérêt (20) par ledit premier système d'acquisition d'images (11),
b/ découpage (302) de l'image (40) ainsi acquise, dite image préalable, en mailles (41) correspondant chacune à un secteur de ladite zone d'intérêt (20) apte à être englobé dans le champ de vue (121) du deuxième système d'acquisition d'images (12),
c/analyse (303) de ladite image préalable (40), pour détecter la présence éventuelle de taches (42, 42') représentatives d'éléments indésirables dans ou au-dessus de la zone d'intérêt (20),
d/ identification (304) des mailles (411) de ladite image préalable ne comportant aucune tache représentative d'éléments indésirables, lesdites mailles (411) correspondant à des secteurs dits favorables de ladite zone d'intérêt (20),
e/ et, le cas échéant, acquisition (306) d'une image, dite image finale, de secteur(s) favorable(s) par ledit deuxième système d'acquisition d'images (12),
ledit procédé étant **caractérisé en ce que** :
- chacune de ladite première plateforme aérienne ou spatiale et de ladite deuxième plateforme aérienne ou spatiale est placée dans une position stationnaire au-dessus de ladite surface terrestre (22) ou se déplaçant à une vitesse inférieure à 200 km/h au-dessus de ladite surface terrestre (22),
- et, si à l'issue de la mise en œuvre dudit cycle d'observation (30) un taux prédéterminé de secteurs de la zone d'intérêt (20) pour lesquels une image finale a été acquise par le deuxième système d'acquisition d'images (12) n'a pas été atteint, réitération(s) (308) du cycle d'observation (30) jusqu'à ce que ledit taux soit atteint.

2. Procédé selon la revendication 1, selon lequel la première plateforme et la deuxième plateforme sont une seule et même plateforme (10).

3. Procédé selon l'une quelconque des revendications 1 à 2, comprenant une étape de validation (307) de la conformité des images finales acquises par le deuxième système d'acquisition d'images à un critère préétabli, et, si un taux prédéterminé de secteurs de la zone d'intérêt (20) pour lesquels une image finale a été validée n'a pas été atteint, réitération(s) (308) du cycle d'observation (30) jusqu'à ce que ledit taux soit atteint.

4. Procédé selon l'une quelconque des revendications 1 à 3, selon lequel, pour un cycle d'observation (30), il n'est pas réalisé d'acquisition (306) d'une image finale par le deuxième système d'acquisition d'images (12) pour les secteurs de ladite zone d'intérêt (20) pour lesquels une image finale a été acquise, ou le cas échéant acquise et validée, lors d'un cycle d'observation (30) précédent.

5. Procédé selon l'une quelconque des revendications 1 à 4, comportant, pour un cycle d'observation (30), après l'étape d/, d'identification (304) des mailles (411) de ladite image préalable (40) ne comportant aucune tache représentative d'éléments indésirables, une étape de détermination (305) d'un ordre de priorité des secteurs de ladite zone d'intérêt (20) pour l'acquisition des images par le deuxième système d'acquisition d'images (12), selon un ou des critère(s) préétabli(s).

6. Procédé selon la revendication 5, selon lequel ladite deuxième plateforme aérienne ou spatiale se déplace à une vitesse inférieure à 200 km/h au-dessus de ladite surface terrestre (22) et dans ladite étape de détermination (305) d'un ordre de priorité des secteurs de ladite zone d'intérêt (20) pour l'acquisition des images par le deuxième système d'acquisition d'images (12), un degré de priorité plus élevé est attribué aux secteurs favorables pour lesquels le temps restant avant leur sortie hors du champ de regard du deuxième système d'acquisition d'images (20) est le plus court, tout en étant supérieur au temps nécessaire pour l'acquisition d'une image dudit secteur par ledit deuxième système d'acquisition d'images (12).

7. Procédé selon l'une quelconque des revendications 5 à 6, selon lequel ladite étape de détermination (305) d'un ordre de priorité des secteurs de ladite zone d'intérêt (20) pour l'acquisition des images par le deuxième système d'acquisition d'images (12) comprend :
f/ à partir de données de direction et de vitesse de déplacement de chaque élément indésirable dans ou au-dessus de la zone d'intérêt (20), la détermination (3053) pour chaque secteur favorable de la zone d'intérêt (20) pour lequel une image finale n'a pas encore été acquise, du temps restant avant l'apparition d'un élément indésirable,
g/ le classement (3054) desdits secteurs par ordre de priorité pour l'acquisition des images par le deuxième système d'acquisition d'images (12), un degré de priorité d'autant plus élevé étant attribué aux secteurs favorables pour lesquels le temps restant avant l'apparition d'un élément indésirable est le plus court tout en étant supérieur au temps nécessaire pour l'acquisition d'une image dudit secteur par le deuxième système d'acquisition d'images (12).

8. Procédé selon la revendication 7, comportant pour ledit cycle d'observation (30) une étape de détermination des données de direction et de vitesse de déplacement de chaque élément indésirable dans ou au-dessus de la zone d'intérêt (20) par :
f1/ comparaison (3051) de l'image préalable (40) acquise au cours dudit cycle d'observation (30) avec l'image préalable (40) acquise au cours d'un cycle d'observation (30) précédent,
f2/ détermination (3052), à partir de ladite comparaison et de l'intervalle de temps entre les acquisitions d'image préalable (40) respectives desdits deux cycles d'observation (30), de la direction et de la vitesse de déplacement de chaque élément indésirable dans ou au-dessus de la zone d'intérêt (20).

9. Procédé selon l'une quelconque des revendications 1 à 8, selon lequel l'intervalle de temps entre les étapes a/, d'acquisition (301) d'une image (40) de ladite zone d'intérêt (20) par ledit premier système d'acquisition d'images (11), respectives de deux cycles d'observation (30) successifs est comprise entre 1 seconde et 2 minutes.

10. Procédé selon l'une quelconque des revendications 1 à 9, selon lequel pour l'étape e/ d'acquisition (306) d'une image (40) de chacun des secteurs de ladite zone d'intérêt (20), la fréquence d'acquisition d'images par ledit deuxième système d'acquisition d'images (12) est comprise entre 1 et 50 images par seconde.

11. Procédé selon l'une quelconque des revendications 1 à 10, selon lequel ladite première plateforme et ladite deuxième plateforme sont placées à une altitude supérieure à 10 km au dessus de la zone d'intérêt (20).

12. Procédé selon l'une quelconque des revendications 1 à 11, selon lequel ladite première plateforme se déplace au-dessus de la surface terrestre (22) de manière telle que la zone d'intérêt (20) reste dans le champ de vue (111) dudit premier système d'acquisition d'images (11) pendant au moins 5 minutes, et ladite deuxième plateforme se déplace au-dessus de la surface terrestre (22) de manière telle que la zone d'intérêt (20) reste dans le champ de regard (122) dudit deuxième système d'acquisition d'images (12) pendant au moins 5 minutes.

13. Procédé selon l'une quelconque des revendications 1 à 12, selon lequel l'étape b/ de découpage (302) en mailles (41) de l'image préalable (40) est réalisée de sorte à ce que les mailles contigües se recouvrent au niveau de leurs bords périphériques.

14. Procédé selon l'une quelconque des revendications 1 à 13, mettant en œuvre simultanément une pluralité de deuxièmes systèmes d'acquisition d'images (12).

15. Dispositif pour l'acquisition d'images de la surface terrestre (22), comportant :
- une première plateforme aérienne ou spatiale comportant un premier système d'acquisition d'images (11) configuré de sorte à ce que son champ de vue (111) puisse englober une zone (20) de ladite surface terrestre (22), dite zone d'intérêt, lorsque ladite première plateforme est placée au-dessus de ladite surface terrestre (22) ;
- une deuxième plateforme aérienne ou spatiale comportant un deuxième système d'acquisition d'images (12) présentant un champ de vue (121) plus étroit et une meilleure résolution que le premier système d'acquisition d'images (11), le champ de vue (121) dudit deuxième système d'acquisition d'images (12) étant orientable et configuré de telle sorte que le champ de regard (122) dudit deuxième système d'acquisition d'images (12) puisse englober ladite zone d'intérêt (20) lorsque ladite deuxième plateforme est placée au-dessus de ladite zone d'intérêt (20) ;
- un système (13) d'analyse d'images et de contrôle du premier système d'acquisition d'images (11) et du deuxième système d'acquisition d'images (12) pour la mise en œuvre des étapes du cycle d'observation d'un procédé selon l'une quelconque des revendications 1 à 14,
ledit dispositif étant **caractérisé en ce que** chacune de ladite première plateforme aérienne ou spatiale et de ladite deuxième plateforme aérienne ou spatiale est configurée pour pouvoir être maintenue dans une position stationnaire au-dessus de ladite surface terrestre (22) ou se déplacer à une vitesse inférieure à 200 km/h au-dessus de ladite surface terrestre (22), ledit système (13) contrôlant le premier système d'acquisition d'images (11) et le deuxième système d'acquisition d'images (12) pour la mise en œuvre de la ou des réitération(s) éventuelle(s) dudit cycle d'observation.

16. Dispositif selon la revendication 15, selon lequel la première plateforme et la deuxième plateforme sont une seule et même plateforme (10).

17. Dispositif selon l'une quelconque des revendications 15 à 16, dans lequel le système (13) d'analyse d'images et de contrôle comprend :
- un module (131) d'analyse d'images pour la détection (302) de taches (42, 42') sur chaque image préalable (40) acquise par le premier système d'acquisition d'images (11), le découpage (303) de l'image préalable (40) en mailles (41) et l'identification (304) des mailles (40) ne comportant aucune tache représentative d'un élément indésirable au-dessus de la zone d'intérêt (20),
- un module (132) de commande du premier système d'acquisition d'images (11) et du deuxième système d'acquisition d'images (12) pour l'acquisition (301, 306) d'images.

18. Dispositif selon l'une quelconque des revendications 15 à 17, dans lequel le système (13) d'analyse d'images et de contrôle comprend un module de calcul (133) configuré pour déterminer, pour un cycle d'observation (30), un ordre de priorité des secteurs de ladite zone d'intérêt (20) pour l'acquisition (306) des images par le deuxième système d'acquisition d'images (12), selon un ou des critère(s) préétabli(s).

19. Dispositif selon la revendication 18, selon lequel ledit module de calcul (133) est configuré pour déterminer, pour un cycle d'observation (30), un ordre de priorité des secteurs de ladite zone d'intérêt (20) pour l'acquisition (306) des images par le deuxième système d'acquisition d'images (12), par :
- à partir de données de direction et de vitesse de déplacement de chaque élément indésirable dans ou au-dessus de la zone d'intérêt (20), détermination (3053) pour chaque secteur favorable de la zone d'intérêt (20) pour lequel une image finale n'a pas encore été acquise, du temps restant avant l'apparition d'un élément indésirable,
- le classement (3054) desdits secteurs par ordre de priorité pour l'acquisition (306) des images par le deuxième système d'acquisition d'images (12), un degré de priorité d'autant plus élevé étant attribué aux secteurs favorables pour lesquels le temps restant avant l'apparition d'un élément indésirable est le plus court tout en étant supérieur au temps nécessaire pour l'acquisition d'une image dudit secteur par le deuxième système d'acquisition d'images (12).

20. Dispositif selon la revendication 19, dans lequel le module de calcul (133) est configuré pour réaliser, pour un cycle d'observation, la comparaison (3051) de l'image préalable (40) acquise au cours dudit cycle d'observation (30) avec l'image préalable (40) acquise au cours d'un cycle d'observation (30) précédent, et la détermination (3052), à partir de ladite comparaison et de l'intervalle de temps entre les acquisitions (301) d'image préalable (40) respectives desdits deux cycles d'observation (30), de la direction et de la vitesse de déplacement de chaque élément indésirable dans ou au-dessus de la zone d'intérêt (20).

21. Produit programme d'ordinateur **caractérisé en ce qu'**il comporte un ensemble d'instructions de code de programme qui, lorsqu'elles sont exécutées par un processeur, conduisent le dispositif selon l'une quelconque des revendications 15 à 20 à mettre en œuvre un procédé d'acquisition d'images selon l'une quelconque des revendications 1 à 14.

22. Procédé de commande à distance d'un dispositif pour l'acquisition d'images de la surface terrestre (22) selon l'une quelconque des revendications 15 à 20, pour la mise en œuvre de l'ensemble des étapes d'un procédé d'acquisition d'images de la surface terrestre (22) selon l'une quelconque des revendications 1 à 14, selon lequel ledit dispositif pour l'acquisition d'images est commandé à distance par un dispositif de commande (21), des signaux de commande étant successivement déterminés et envoyés audit dispositif pour l'acquisition d'images par ce dispositif de commande (21), pour la réalisation desdites étapes.

## Patentansprüche

1. Verfahren zum Erfassen von Bildern der Erdoberfläche (22), umfassend die Schritte:
- Platzieren einer ersten Luft- oder Raumplattform über der Erdoberfläche (22), wobei die erste Plattform ein erstes Bilderfassungssystem (11) mit einem Sichtfeld (111) aufweist, das eine Zone (20), bezeichnet als interessierende Zone, der Erdoberfläche (22) einschließt,
- Platzieren einer zweiten Luft- oder Raumplattform über der Erdoberfläche (22), wobei die zweite Plattform ein zweites Bilderfassungssystem (12) mit einem engeren Sichtfeld (121) und mit einer besseren Auflösung als das erste Bilderfassungssystem (11) aufweist, wobei das Sichtfeld (121) des zweiten Bilderfassungssystems (12) derart ausrichtbar ist, dass das Blickfeld (122) des zweiten Bilderfassungssystems (12) die interessierende Zone (20) einschließt,
- Durchführen eines Beobachtungszyklus (30), umfassend die Schritte:
a/ Erfassen (301) eines Bildes (40) der interessierenden Zone (20) durch das erste Bilderfassungssystem (11),
b/ Zerteilen (302) des derart erfassten Bildes (40), bezeichnet als vorheriges Bild, in Maschen (41), von denen jede einem Sektor der interessierenden Zone (20) entspricht, der imstande ist, im Sichtfeld (121) des zweiten Bilderfassungssystems (12) eingeschlossen zu sein,
c/ Analysieren (303) des vorherigen Bildes (40), um die eventuelle Anwesenheit von Flecken (42, 42') zu ermitteln, die für unerwünschte Elemente in oder über der interessierenden Zone (20) repräsentativ sind,
d/ Identifizieren (304) der Maschen (411) des vorherigen Bildes, die keinen Fleck aufweisen, der für unerwünschte Elemente repräsentativ ist, wobei die Maschen (411) sogenannten günstigen Sektoren der interessierenden Zone (20) entsprechen,
e/ und gegebenenfalls Erfassen (306) eines Bildes, bezeichnet als abschließendes Bild, eines günstigen Sektors/günstiger Sektoren durch das zweite Bilderfassungssystem (12),
wobei das Verfahren **dadurch gekennzeichnet ist, dass**:
- jede von der ersten Luft- oder Raumplattform und von der zweiten Luft- oder Raumplattform in einer stationären Position über der Erdoberfläche (22) platziert ist oder sich mit einer Geschwindigkeit von unter 200 km/h über der Erdoberfläche (22) bewegt,
- und, wenn nach Abschluss der Durchführung des Beobachtungszyklus (30) eine vorher bestimmte Rate von Sektoren der interessierenden Zone (20), für die von dem zweiten Bilderfassungssystem (12) ein abschließendes Bild erfasst wurde, nicht erreicht wurde, Wiederholung(en) (308) des Beobachtungszyklus (30), bis die Rate erreicht ist.

2. Verfahren nach Anspruch 1, wobei die erste Plattform und die zweite Plattform ein und dieselbe Plattform (10) sind.

3. Verfahren nach einem der Ansprüche 1 bis 2, umfassend einen Validierungsschritt (307) der Konformität der von dem zweiten Bilderfassungssystem erfassten abschließenden Bilder mit einem vorher festgelegten Kriterium, und, wenn eine vorher bestimmte Rate von Sektoren der interessierenden Zone (20), für die ein abschließendes Bild validiert wurde, nicht erreicht wurde, Wiederholung(en) (308) des Beobachtungszyklus (30), bis die Rate erreicht ist.

4. Verfahren nach einem der Ansprüche 1 bis 3, wobei für einen Beobachtungszyklus (30) kein Erfassen (306) eines abschließenden Bildes durch das zweite Bilderfassungssystem (12) für die Sektoren der interessierenden Zone (20) durchgeführt wird, für die bei einem vorangehenden Beobachtungszyklus (30) ein abschließendes Bild erfasst wurde oder gegebenenfalls erfasst und validiert wurde.

5. Verfahren nach einem der Ansprüche 1 bis 4, aufweisend, für einen Beobachtungszyklus (30), nach dem Schritt d/ Identifizieren (304) der Maschen (411) des vorherigen Bildes (40), die keinen Fleck aufweisen, der für unerwünschte Elemente repräsentativ ist, einen Schritt des Bestimmens (305) einer Prioritätsreihenfolge der Sektoren der interessierenden Zone (20) für das Erfassen der Bilder durch das zweite Bilderfassungssystem (12) nach einem vorher festgelegten Kriterium/vorher festgelegten Kriterien.

6. Verfahren nach Anspruch 5, wobei sich die zweite Luft- oder Raumplattform mit einer Geschwindigkeit von unter 200 km/h über der Erdoberfläche (22) bewegt und im Schritt des Bestimmens (305) einer Prioritätsreihenfolge der Sektoren der interessierenden Zone (20) für das Erfassen der Bilder durch das zweiten Bilderfassungssystem (12) günstigen Sektoren ein höherer Prioritätsgrad zugewiesen wird, für die die verbleibende Zeit vor ihrem Austritt aus dem Blickfeld des zweiten Bilderfassungssystems (20) die kürzeste ist, wobei sie länger als die Zeit ist, die für das Erfassen eines Bildes des Sektors durch das zweite Bilderfassungssystem (12) notwendig ist.

7. Verfahren nach einem der Ansprüche 5 bis 6, wobei der Schritt des Bestimmens (305) einer Prioritätsreihenfolge der Sektoren der interessierenden Zone (20) für das Erfassen der Bilder durch das zweite Bilderfassungssystem (12) umfasst:
f/ auf der Basis von Richtungs- und Bewegungsgeschwindigkeitsdaten jedes unerwünschten Elements in oder über der interessierenden Zone (20), das Bestimmen (3053), für jeden günstigen Sektor der interessierenden Zone (20), für den noch kein abschließendes Bild erfasst wurde, der verbleibenden Zeit vor dem Auftauchen eines unerwünschten Elements,
g/ das Klassifizieren (3054) der Sektoren durch Prioritätsreihenfolge für das Erfassen der Bilder durch das zweite Bilderfassungssystem (12), wobei den günstigen Sektoren ein umso höherer Prioritätsgrad zugewiesen wird, für die die verbleibende Zeit vor dem Auftauchen eines unerwünschten Elements am kürzesten ist, wobei sie länger als die Zeit ist, die für das Erfassen eines Bildes des Sektors durch das zweite Bilderfassungssystem (12) notwendig ist.

8. Verfahren nach Anspruch 7, aufweisend, für den Beobachtungszyklus (30), eines Schritts des Bestimmens der Richtungs- und Bewegungsgeschwindigkeitsdaten jedes unerwünschten Elements in oder über der interessierenden Zone (20) durch:
f1/ Vergleichen (3051) des vorherigen Bildes (40), das während des Beobachtungszyklus (30) erfasst wurde, mit dem vorherigen Bild (40), das während eines vorangehenden Beobachtungszyklus (30) erfasst wurde,
f2/ Bestimmen (3052), auf der Basis des Vergleichs und des Zeitintervalls zwischen den jeweiligen Erfassungen eines vorherigen Bildes (40) der zwei Beobachtungszyklen (30), der Richtung und Bewegungsgeschwindigkeit jedes unerwünschten Elements in oder über der interessierenden Zone (20).

9. Verfahren nach einem der Ansprüche 1 bis 8, wobei das Zeitintervall zwischen den jeweiligen Schritten a/ des Erfassens (301) eines Bildes (40) der interessierenden Zone (20) durch das erste Bilderfassungssystem (11) von zwei aufeinanderfolgenden Beobachtungszyklen (30) zwischen 1 Sekunde und 2 Minuten liegt.

10. Verfahren nach einem der Ansprüche 1 bis 9, wobei für den Schritt e/ des Erfassens (306) eines Bildes (40) jedes der Sektoren der interessierenden Zone (20) die Frequenz des Erfassens von Bildern durch das zweite Bilderfassungssystem (12) zwischen 1 und 50 Bildern je Sekunde liegt.

11. Verfahren nach einem der Ansprüche 1 bis 10, wobei die erste Plattform und die zweite Plattform in einer Höhe von über 10 km über der interessierenden Zone (20) platziert sind.

12. Verfahren nach einem der Ansprüche 1 bis 11, wobei sich die erste Plattform über der Erdoberfläche (22) derart bewegt, dass die interessierende Zone (20) im Sichtfeld (111) des ersten Bilderfassungssystems (11) während mindestens 5 Minuten verbleibt und sich die zweite Plattform über der Erdoberfläche (22) derart bewegt, dass die interessierende Zone (20) im Blickfeld (122) des zweiten Bilderfassungssystems (12) während mindestens 5 Minuten verbleibt.

13. Verfahren nach einem der Ansprüche 1 bis 12, wobei der Schritt b/ des Zerteilens (302) in Maschen (41) des vorherigen Bildes (40) derart durchgeführt wird, dass sich die Maschen in unmittelbarer Nachbarschaft im Bereich ihrer Umfangsränder überlappen.

14. Verfahren nach einem der Ansprüche 1 bis 13, das gleichzeitig eine Vielzahl zweiter Bilderfassungssysteme (12) umsetzt.

15. Vorrichtung zum Erfassen von Bildern der Erdoberfläche (22), aufweisend:
- eine erste Luft- oder Raumplattform, aufweisend ein erstes Bilderfassungssystem (11), das derart ausgelegt ist, dass sein Sichtfeld (111) eine Zone (20) der Erdoberfläche (22), bezeichnet als interessierende Zone, einschließen kann, wenn die erste Plattform über der Erdoberfläche (22) platziert ist;
- eine zweite Luft- oder Raumplattform, aufweisend ein zweites Bilderfassungssystem (12), das ein engeres Sichtfeld (121) mit einer besseren Auflösung als das erste Bilderfassungssystem (11) aufweist, wobei das Sichtfeld (121) des zweiten Bilderfassungssystems (12) ausrichtbar und derart ausgelegt ist, dass das Blickfeld (122) des zweiten Bilderfassungssystems (12) die interessierende Zone (20) einschließen kann, wenn die zweite Plattform über der interessierenden Zone (20) platziert ist;
- ein Bildanalyse- und Steuersystem (13) des ersten Bilderfassungssystems (11) und des zweiten Bilderfassungssystems (12) für die Durchführung der Schritte des Beobachtungszyklus eines Verfahren nach einem der Ansprüche 1 bis 14,
wobei die Vorrichtung **dadurch gekennzeichnet ist, dass** jede von der ersten Luft- oder Raumplattform und von der zweiten Luft- oder Raumplattform ausgelegt ist, um in einer stationären Position über der Erdoberfläche (22) gehalten werden zu können oder um sich mit einer Geschwindigkeit von unter 200 km/h über der Erdoberfläche (22) zu bewegen, wobei das System (13) das erste Bilderfassungssystem (11) und das zweite Bilderfassungssystem (12) für die Durchführung der eventuellen Wiederholung(en) des Beobachtungszyklus steuert.

16. Vorrichtung nach Anspruch 15, wobei die erste Plattform und die zweite Plattform ein und dieselbe Plattform (10) sind.

17. Vorrichtung nach einem der Ansprüche 15 bis 16, wobei das Bildanalyse- und Steuersystem (13) umfasst:
- ein Bildanalysemodul (131) für die Ermittlung (302) von Flecken (42, 42') auf jedem vorherigen Bild (40), das von dem ersten Bilderfassungssystem (11) erfasst wurde, wobei das Zerteilen (303) des vorherigen Bildes (40) in Maschen (41) und das Identifizieren (304) der Maschen (40) keinen Fleck aufweist, der für ein unerwünschtes Element über der interessierenden Zone (20) repräsentativ ist,
- ein Steuermodul (132) des ersten Bilderfassungssystems (11) und des zweiten Bilderfassungssystems (12) für das Erfassen (301, 306) von Bildern.

18. Vorrichtung nach einem der Ansprüche 15 bis 17, wobei das Bildanalyse- und Steuersystem (13) ein Rechenmodul (133) umfasst, das ausgelegt ist, um für einen Beobachtungszyklus (30) eine Prioritätsreihenfolge der Sektoren der interessierenden Zone (20) für das Erfassen (306) der Bilder durch das zweite Bilderfassungssystem (12) nach einem oder vorher festgelegten Kriterien festzulegen.

19. Vorrichtung nach Anspruch 18, wobei das Rechenmodul (133) ausgelegt ist, um für einen Beobachtungszyklus (30) eine Prioritätsreihenfolge der Sektoren der interessierenden Zone (20) für das Erfassen (306) der Bilder durch das zweite Bilderfassungssystem (12) festzulegen, durch:
- auf der Basis von Richtungs- und Bewegungsgeschwindigkeitsdaten jedes unerwünschten Elements in oder über der interessierenden Zone (20), Bestimmen (3053), für jeden günstigen Sektor der interessierenden Zone (20), für den noch kein abschließendes Bild erfasst wurde, der verbleibenden Zeit vor dem Auftauchen eines unerwünschten Elements,
- das Klassifizieren (3054) der Sektoren durch Prioritätsreihenfolge für das Erfassen (306) der Bilder durch das zweite Bilderfassungssystem (12), wobei ein den günstigen Sektoren umso höherer Prioritätsgrad zugewiesen wird, für die die verbleibende Zeit vor dem Auftauchen eines unerwünschten Elements am kürzesten ist, wobei sie länger als die Zeit ist, die für das Erfassen eines Bildes des Sektors durch das zweite Bilderfassungssystem (12) notwendig ist.

20. Vorrichtung nach Anspruch 19, wobei das Rechenmodul (133) ausgelegt ist, um für einen Beobachtungszyklus das Vergleichen (3051) des vorherigen Bildes (40), das während des Beobachtungszyklus (30) erfasst wurde, mit dem vorherigen Bild (40), das während eines vorangehenden Beobachtungszyklus (30) erfasst wurde, und das Bestimmen (3052), auf der Basis des Vergleichs und des Zeitintervalls zwischen den jeweiligen Erfassungen (301) des vorherigen Bildes (40) der zwei Beobachtungszyklen (30), der Richtung und Bewegungsgeschwindigkeit jedes unerwünschten Elements in oder über der interessierende Zone (20) durchzuführen.

21. Rechnerprogrammprodukt, **dadurch gekennzeichnet, dass** es eine Gesamtheit von Programmcodebefehlen aufweist, die, wenn sie von einem Prozessor ausgeführt werden, die Vorrichtung nach einem der Ansprüche 15 bis 20 dazu veranlassen, ein Bilderfassungsverfahren nach einem der Ansprüche 1 bis 14 durchzuführen.

22. Verfahren zur Fernsteuerung einer Vorrichtung zum Erfassen von Bildern der Erdoberfläche (22) nach einem der Ansprüche 15 bis 20 für die Durchführung der Gesamtheit der Schritte eines Verfahrens zum Erfassen von Bildern der Erdoberfläche (22) nach einem der Ansprüche 1 bis 14, wobei die Bilderfassungsvorrichtung von einer Steuervorrichtung (21) ferngesteuert wird, wobei Steuersignale aufeinanderfolgend bestimmt und von dieser Steuervorrichtung (21) an die Bilderfassungsvorrichtung für die Durchführung der Schritte geschickt werden.

## Claims

1. Method for acquiring images of the surface of the Earth (22), **characterised in that** it comprises steps of:
- placing of a first aerial or space platform in a stationary position above said surface of the Earth (22) or moving at a speed less than 200km/h above said surface of the Earth (22), said first platform comprising a first image acquisition system (11) with a field of view (111) covering a zone (20), called zone of interest, of said surface of the Earth (22),
- placing of a second aerial or space platform in a stationary position above said surface of the Earth (22) or moving at a speed less than 200km/h above said surface of the Earth (22), said second platform comprising a second image acquisition system (12) with a narrower field of view (121) and of better resolution than the first image acquisition system (11), the field of view (121) of said second image acquisition system (12) being orientable such that the field of regard (122) of said second image acquisition system (12) covers said zone of interest (20),
- implementing an observation cycle (30) comprising steps of:
a/ acquiring (301) an image (40) of said zone of interest (20) by said first image acquisition system (11),
b/ partitioning (302) of the image (40) thus acquired, called preliminary image, in mesh units (41) each corresponding to a sector of said zone of interest (20) capable of being included in the field of view (121) of the second image acquisition system (12),
c/analysing (303) said preliminary image (40), to detect the potential presence of marks (42, 42') representative of unwanted elements in or above the zone of interest (20),
d/ identifying (304) mesh units (411) of said preliminary image comprising no mark representative of unwanted elements, said mesh units (411) corresponding to so-called favourable sectors of said zone of interest (20),
e/ and, if applicable, acquiring (306) an image, called final image, of favourable sector(s) by said second image acquisition system (12),
- and, if a predetermined rate of sectors of the zone of interest (20) for which a final image has been acquired by the second image acquisition system (12) has not been achieved, repeat(s) (308) of the observation cycle (30) until said rate is achieved.

2. Method according to claim 1, wherein the first platform and the second platform are one single and same platform (10).

3. Method according to any one of claims 1 to 2, comprising a step of validating (307) the conformity of the final images acquired by the second image acquisition system with respect to a preestablished criterion, and, if a predetermined rate of sectors of the zone of interest (20) for which a final image has been validated has not been achieved, repeat(s) (308) of the observation cycle (30) until said rate is achieved.

4. Method according to any one of claims 1 to 3, wherein, for an observation cycle (30), no acquiring (306) of a final image by the second image acquisition system (12) is carried out for the sectors of said zone of interest (20) for which a final image has been acquired, or optionally, acquired and validated, during a preceding observation cycle (30).

5. Method according to any one of claims 1 to 4, comprising, for an observation cycle (30), after step d/ of identifying (304) mesh units (411) of said preliminary image (40) comprising no mark representative of unwanted elements, a step of determining (305) an order of priority of the sectors of said zone of interest (20) for the acquiring of images by the second image acquisition system (12), according to one or more preestablished criterion/criteria.

6. Method according to claim 5, wherein said second aerial or space platform moves at a speed less than 200km/h above said surface of the Earth (22) and in said step of determining (305) an order of priority of the sectors of said zone of interest (20) for the acquiring of images by the second image acquisition system (12), a higher degree of priority is attributed to the favourable sectors for which the remaining time before the exiting thereof outside of the field of regard of the second image acquisition system (20) is the shortest, while being greater than the time necessary for the acquiring of an image of said sector by said second image acquisition system (12).

7. Method according to any one of claims 5 to 6, wherein said step of determining (305) an order of priority of the sectors of said zone of interest (20) for the acquiring of images by the second image acquisition system (12) comprises:
f/ from data of direction and speed of movement of each unwanted element in or above the zone of interest (20), determination (3053) for each favourable sector of the zone of interest (20) for which a final image has not yet been acquired, of the remaining time before the appearance of an unwanted element,
g/ classifying (3054) said sectors by order of priority for the acquiring of images by the second image acquisition system (12), an even higher degree of priority being attributed to the favourable sectors for which the remaining time before the appearance of an unwanted element is the shortest, while being greater than the time necessary for the acquiring of an image of said sector by the second image acquisition system (12).

8. Method according to claim 7, comprising for said observation cycle (30), a step of determining data of direction and speed of movement of each unwanted element in or above the zone of interest (20) by:
f1/ comparing (3051) the preliminary image (40) acquired during said observation cycle (30) with the preliminary image (40) acquired during a preceding observation cycle (30),
f2/ determining (3052), from said comparison and from the time interval between the respective acquisitions of preliminary image (40) of said two observation cycles (30), of the direction and the speed of movement of each unwanted element in or above the zone of interest (20).

9. Method according to any one of claims 1 to 8, wherein the time interval between the respective steps a/ of acquiring (301) an image (40) of said zone of interest (20) by said first image acquisition system (11), of two successive observation cycles (30) is of between 1 second and 2 minutes.

10. Method according to any one of claims 1 to 9, wherein, for step e/ of acquiring (306) an image (40) of each of the sectors of said zone of interest (20), the frequency for acquiring images by said second image acquisition system (12) is of between 1 and 50 images per second.

11. Method according to any one of claims 1 to 10, wherein said first platform and said second platform are placed at an altitude greater than 10km above the zone of interest (20).

12. Method according to any one of claims 1 to 11, wherein said first platform moves above the surface of the Earth (22) in such a way that that the zone of interest (20) remains in the field of view (111) of said first image acquisition system (11) for at least 5 minutes, and said second platform moves above the surface of the Earth (22) in such a way that that the zone of interest (20) remains in the field of regard (122) of said second image acquisition system (12) for at least 5 minutes.

13. Method according to any one of claims 1 to 12, wherein step b/ of partitioning (302) the preliminary image (40) in mesh units (41) is carried out such that the contiguous mesh units overlap at their peripheral edges.

14. Method according to any one of claims 1 to 13, implementing simultaneously a plurality of second image acquisition systems (12).

15. Device for the acquiring of images of the surface of the Earth (22), **characterised in that** it comprises:
- a first aerial or space platform configured to be able to be maintained in a stationary position above the surface of the Earth (22), or to move at a speed less than 200km/h above the surface of the Earth (22), said first platform comprising a first image acquisition system (11) configured such that the field of view (111) thereof can cover a zone (20) of said surface of the Earth (22), called zone of interest, when said first platform is placed above said surface of the Earth (22);
- a second aerial or space platform configured to be able to be maintained in a stationary position above said surface of the Earth (22), or to move at a speed less than 200km/h above said surface of the Earth (22), said second platform comprising a second image acquisition system (12) having a narrower field of view (121) and a better resolution than the first image acquisition system (11), the field of view (121) of said second image acquisition system (12) being orientable and configured such that the field of regard (122) of said second image acquisition system (12) can cover said zone of interest (20) when said second platform is placed above said zone of interest (20);
- a system (13) for analysing images and for controlling the first image acquisition system (11) and the second image acquisition system (12) for the implementation of the steps of the observation cycle of a method according to any one of claims 1 to 14, and the potential repeat(s) of this observation cycle.

16. Device according to claim 15, wherein the first platform and the second platform are one single and same platform (10).

17. Device according to any one of claims 15 to 16, wherein the system (13) for analysing images and controlling, comprises:
- a module (131) for analysing images for detecting (302) marks (42, 42') on each preliminary image (40) acquired by the first image acquisition system (11), the partitioning (303) of the preliminary image (40) in mesh units (41) and identifying (304) mesh units (304) that comprise no mark representative of an unwanted element above the zone of interest (20),
- a module (132) for controlling the first image acquisition system (11) and the second image acquisition system (12) for the acquiring (301, 306) of images.

18. Device according to any one of claims 15 to 17, wherein the system (13) for analysing images and for controlling comprises a calculation module (133) configured to determine, for an observation cycle (30), an order of priority of the sectors of said zone of interest (20) for the acquiring (306) of images by the second image acquisition system (12), according to one or more preestablished criterion/criteria.

19. Device according to claim 18, wherein said calculation module (133) is configured to determine, for an observation cycle (30), an order of priority of the sectors of said zone of interest (20) for the acquiring (306) of images by the second image acquisition system (12), by:
- from data of direction and speed of movement of each unwanted element in or above the zone of interest (20), determining (3053) for each favourable sector of the zone of interest (20) for which a final image has not yet been acquired, the remaining time before the appearance of an unwanted element,
- the classifying (3054) of said sectors by order of priority for the acquiring (306) of images by the second image acquisition system (12), an even higher degree of priority being attributed to the favourable sectors for which the remaining time before the appearance of an unwanted element is the shortest, while being greater than the time necessary for the acquiring of an image of said sector by the second image acquisition system (12).

20. Device according to claim 19, wherein the calculation module (133) is configured to carry out, for an observation cycle, the comparison (3051) of the preliminary image (40) acquired during said observation cycle (30) with the preliminary image (40) acquired during a preceding observation cycle (30), and determining (3052), from said comparison and from the time interval between the respective acquisitions (301) of preliminary image (40) of said two observation cycles (30), of the direction and of the speed of movement of each unwanted element in or above the zone of interest (20).

21. Computer program product **characterised in that** it comprises a set of program code instructions which, when they are executed by a processor, lead the device according to any one of claims 15 to 20 to implement a method for acquiring images according to any one of claims 1 to 14.

22. Method for remotely controlling a device for the acquiring of images of the surface of the Earth (22) according to any one of claims 15 to 20, for the implementation of all of the steps of a method for acquiring images of the surface of the Earth (22) according to any one of claims 1 to 14, wherein said device for the acquiring of images is remotely controlled by a control device (21), control signals being successively determined and sent to said device for the acquiring of images by this control device (21), to carry out said steps.
